# EUROPEAN PATENT APPLICATION

(11) **EP 3 734 132 A1**
(43) Date of publication of application: **04.11.2020**
(21) Application number: 20171753.5
(22) Date of filing: 28.04.2020
(51) Int. Cl.: F16L 27/047

(54) **LOW PROFILE FLEXIBLE COUPLING AND TOOL FOR ASSEMBLING FLEXIBLE COUPLINGS**

(30) Priority: 30.04.2019 US 201962840603 P; 17.03.2020 US 202062990699 P
(71) Applicant: Roller Bearing Company of America, Inc., Oxford, CT 06478 (US)
(72) Inventor: VILA, Smail, Louisville, KY Kentucky 40241 (US); TODD FEE, Kenneth, Franklin, IN Indiana 46131 (US)
(74) Representative: Bjerkéns Patentbyrå KB (Stockholm)

(57) **Abstract**

A low profile flexible coupling (10) for high temperature / high pressure and low temperature / low pressure pneumatic systems and a tool and a method for installing the flexible coupling. The flexible coupling includes (10) an annular inner member (20) having a convex surface (22), an annular outer member (30) that is assembled over the inner member (20) having a first concave sealing surface (32) conforming to the convex surface and a locking member (40) assembled over the inner member and having a second concave sealing surface (42) that conforms to the convex surface. The outer member (30) is positioned over the locking member (40).

## Description

### Technical Field

The invention relates to but is not limited to aircraft and engine pneumatic systems having flexible couplings for joining duct assemblies and subassemblies to one another while allowing sealing movement to compensate for structural kinematics and dynamic loads. Engine applications include but are not limited to: engine anti-ice, starter ducts, air bleed and cooling systems. Aircraft applications include but are not limited to: APU (auxiliary power unit) bleed, aircraft pneumatic supply ducts, air cycle machine, air conditioning packs and wing anti-ice systems. The flexible couplings for low temperature / low pressure pneumatic systems are capable of operation at a maximum temperature of 600°F and a maximum pressure of 200 PSI. The flexible couplings for high temperature / high pressure pneumatic systems are capable of operation at temperatures greater than 600°F (e.g., 1500°F and greater) and at pressures greater than pressure of 200 PSI (e.g., 3000 PSI and greater). The invention also relates to a tool and method for assembling the flexible couplings, as set forth above.

### Background

Generally, engines and aircraft pneumatic systems from original equipment manufacturers (hereinafter "OEM") utilize bellows and/or couplings built as a combination of bellows and carbon seal based couplings. Such designs lack sufficient system dynamic load resistance, thereby causing premature failures. Moreover, bellows couplings are limited in response to dynamic lateral and offset articulations and are limited from twisting articulation, exhibiting cracks when exposed to dynamic loads, vibrations and articulations. Carbon based seals in these prior art couplings crumble under dynamic loads and vibrations, causing cracks or premature and excessive wear that freezes the couplings and overloads the system causing fatigue and cracking, which in extreme cases causes duct cracks and deformations. Thus, bellows couplings can fatigue and fail catastrophically causing system leaks and significant pressure drops, exceeding allowable leak and pressure drop limits. Prior art bellows couplings also cannot yield to axial torque, which is transferred through the systems as additional torsion loads.

OEM couplings are built with machined and sheet metal structural components having seals made of carbon or carbon composites. These OEM couplings include: carbon seal based couplings, bellows, encapsulated bellows, gimbal joints or combinations thereof

Existing OEM couplings have limited life and reliability, limited articulation ranges, very limited system load resistance and no system vibration resistance. Most of the prior art designs transfer loads between system sides. Bellows and gimbal couplings do not yield to axial torque between the system sides. Some designs cause flow disturbances; have limited adjustment capability for internal coupling stiffness and bending moments; and have limited design options for extreme loads and articulations. Existing OEM seals are not field replaceable, requiring repair by cutting, special tooling and often requiring specialty shop support. Carbon seal based couplings exhibit wear and friction characteristics which cause premature and catastrophic failures. Carbon seal based couplings wear progressively, causing the couplings to freeze and/or stick, overloading the system. This consequently causes structural strain and cracking. In addition, the progressive wear of the carbon seal causes high system leakage and loss of pressure, decreasing system efficiency and causes premature, frequent and costly repairs, sometimes requiring flight cancelations.

OEM coupling assemblies equipped with carbon based seals require a precise fit in order to satisfy the required leakage limits. This is achieved using multiple shims, sometimes requiring repeated assembly/disassembly and ATP (Acceptance Test Procedures) leakage checks until the requirements are satisfied.

Gimbals are equipped with "U" joints to provide internal restraint. Typically, "U" couplings are retained by internal or external retaining devices such as U-shaped frames assembled with pins, which in some systems break causing catastrophic failure of the coupling. In addition, the internal retaining devices cause significant flow disturbances. Existing OEM couplings also have high installation forces.

Existing flexible coupling designs using bellows or carbon rings based couplings under normal operating conditions are readily subject to cracking and breakage with mechanical vibrations of the coupling. The carbon seal based couplings' premature failures are more frequent and when longer-lasting bellows fail it causes catastrophic failure. In order to repair the systems the bellows must be removed and replaced with an entire new unit, and carbon ring replacement also requires removal of the coupling itself. In both cases, cutting of the failed unit and re-welding of the new or repaired unit require special, suitably equipped shops and certified repair facilities.

There is a need to provide a sealed flexible coupling containing seal rings capable of withstanding long term exposure to mechanical and thermal stresses and vibrations without cracking, fatigue or breakage while maintaining undisturbed flow. It is also desirable to have a sealed, flexible coupling which can be taken apart at the site and has seal rings that can be replaced using standard shop tools and techniques, eliminating the need for sending the assembly to a remote certified repair station to remove the coupling from its attached conduits.

### Summary

There is disclosed herein a low profile flexible coupling for pneumatic systems to provide transfer of a gas between first and second conduits. The flexible coupling includes an annular inner member defining a spherically shaped convex seal receiving surface that extends from a first end to a second end and is interrupted by a first radially inward extending seal ring assembly groove that extends circumferentially around the inner member. The flexible coupling includes an annular outer member that is assembled over the inner member. The outer member defines a spherically shaped first concave seal receiving surface that conforms to the convex seal receiving surface. The flexible coupling includes a locking member, preferably an annular locking nut, assembled over the inner member. The locking member defines a spherically shaped second concave seal receiving surface conforms to the convex seal receiving surface. The outer member is positioned over the locking member.

In one embodiment, the flexible coupling has a profile ratio of a coupling radial thickness to a conduit diameter. The profile ratio is of a magnitude sufficient to accommodate installation of the flexible coupling within a tight installation window. The coupling radial thickness is defined as the radial thickness of the outer member and the conduit diameter is defined as the diameter of the first and/or second conduits. The profile ratio is less than approximately 0.17 and preferably between approximately 0.13 and 0.14.

In one embodiment, a retainer ring is installed into a radially outward extending retainer ring groove formed in the outer member.

In one embodiment, the locking member has an abutment surface formed on an edge thereof which abuts against the first end of the convex seal receiving surface at a maximum angulation angle. The first concave seal receiving surface, the second concave seal receiving surface, and the convex seal receiving surface each surround a centerline and the convex seal receiving surface is movable relative to the first concave seal receiving surface and the second concave seal receiving surface about a common center point C.

In one embodiment, there is a first thread on the outer member which engages a complementary second thread on the locking member to secure the locking member to the outer member.

In one embodiment, an annular leakage seal is mounted axially between the locking member and the outer member.

In one embodiment, the flexible coupling is configured for low temperature and low pressure operation. The flexible coupling has: (a) the first concave seal receiving surface of the outer member interrupted by a first radially outward extending seal ring assembly groove that extends circumferentially around the outer member; and/or (b) the second concave seal receiving surface of the locking ring interrupted by a second radially outward extending seal ring assembly groove that extends circumferentially around the locking member. The flexible coupling includes; (a) a first seal ring assembly disposed in the first radially inward extending seal ring assembly groove, (b) a second seal ring assembly disposed in the first radially outward extending seal ring assembly groove, and (c) a third seal ring assembly disposed in the second radially outward extending seal ring assembly groove. The first seal ring assembly, the second seal ring assembly and the third seal ring assembly include one or more seal member and one or more seal energizers, preferably a canted biasing member. The third seal ring assembly includes a C-shaped seal ring, the C-shaped seal ring is disposed in the second radially outward extending seal ring assembly groove and the seal energizer is disposed in a seal cavity formed in the C-shaped seal ring. A first seal ring assembly is disposed in the first radially inward extending seal ring assembly groove, the first seal ring assembly includes a convex spherical crown that has one or more seal energizers. The convex spherical crown conforming to the first concave seal receiving surface and the second concave seal receiving surface, the seal energizers generating a biasing force acting outwardly away from the first radially inward extending seal ring assembly groove. The second seal ring assembly is a generally L-shaped seal ring and includes one or more seal energizers that generate a biasing force that acts simultaneously inwardly toward the inner member and axially against an outer shoulder of the outer member.

In one embodiment, the flexible coupling is configured for high temperature and high pressure operation. The flexible coupling has the convex seal receiving surface of the annular inner member interrupted by both a first radially inward extending seal ring assembly groove and a second radially inward extending seal ring assembly groove, each of which extend circumferentially around the inner member. The flexible coupling includes: (a) a first seal ring assembly disposed in the first radially inward extending seal ring assembly groove and (b) a second seal ring assembly disposed in the second radially inward extending seal ring assembly groove. The first seal ring assembly includes a first primary annular seal segment, a second primary annular seal segment and a third primary annular seal segment. The second primary seal segment is positioned between and axially abutting the first primary seal segment and the third primary seal segment. A first secondary annular seal segment and a second secondary annular seal segment axially abut the first secondary annular seal segment at a first abutment interface. The first secondary annular seal segment and the second secondary annular seal segment are disposed radially inward from the first primary annular seal segment, he second primary annular seal segment and the third primary annular seal segment. The first abutment interface is positioned along a radially inward facing surface of the second primary seal segment. A first biasing ring and a second biasing ring are located axially adjacent to one another. The first biasing ring is positioned radially inward from the first secondary annular seal segment. The first biasing ring is configured to urge the first secondary seal segment, the first primary annular seal segment and the second primary annular seal segment radially outward against and in sealing engagement with the second concave seal receiving surface of the locking member. The second biasing ring is configured to urge the second secondary seal segment, the second primary annular seal segment and the third primary annular seal segment radially outward against and in sealing engagement with the second concave seal receiving surface of the locking member. The first primary annular seal segment, the second primary annular seal segment and the third primary annular seal segment cooperate with one another to form a first convex spherical crown conforming in shape to the second concave seal receiving surface of the locking member. The first secondary annular seal segment extends axially across the first primary annular seal segment and a portion of the second primary annular seal segment. The second secondary annular seal segment extends axially across the third primary annular seal segment and a portion of the second primary annular seal segment. The second seal ring assembly includes a fourth primary annular seal segment and a fifth primary annular seal segment axially abutting each other. A third secondary annular seal segment is disposed radially inward from the fourth primary annular seal segment and the fifth primary annular seal segment. A third biasing ring is positioned radially inward from the third secondary annular seal segment, the third biasing ring is configured to urge the third secondary seal segment, the fourth primary annular seal segment and the fifth primary annular seal segment radially outward against and in sealing engagement with the first concave seal receiving surface of the outer member. The fourth primary annular seal segment and the fifth primary annular seal segment cooperate with one another to form a second convex spherical crown conforming in shape to the first concave seal receiving surface of the outer member. The third secondary seal segment extends axially across the fourth primary annular seal segment and the fifth primary annular seal segment.

There is further disclosed herein a tool for assembling a flexible coupling. The tool includes a housing that has a first interior surface and one or more first anti-rotation features in communication with the first interior surface. The first interior surface extends axially from a first end to a second end. A first opening is located at the first end. The tool includes a threaded rod having threads extending continuously from an anchor end to a free end of the threaded rod. The anchor end of the threaded rod is secured relative to the housing. The threaded rod extends out of the housing through the first opening. The threads have a major diameter. The tool includes a thrust transfer assembly that has a first bearing plate and a second bearing plate. A thrust bearing is positioned between and in rolling engagement with the first bearing plate and the second bearing plate. The first bearing plate has a first outside diameter and a first bore extending therethrough. The first bore has a first inside diameter. The second bearing plate has a second outside diameter and a second bore, extending therethrough. The second bore has a second inside diameter. The thrust bearing has a third outside diameter and a third bore extending therethrough. The third bore has a third inside diameter. The first inside diameter, the second inside diameter and the third inside diameter are greater than the major diameter of the threads. The threaded rod extends through the first bore, the second bore and the third bore such that the thrust transfer assembly is axially movable relative to the threaded rod. A nut is threaded onto the threaded rod from the free end of the threaded rod. The nut has an exterior width that is greater than the first inside diameter. An axial face of the nut is configured to engage a mating axial face of the first bearing plate. The tool includes a torque application assembly that includes an annular ring that has a second interior surface that extends axially therethrough and faces the first interior surface of the housing. The second interior surface has a minimum inside diameter that is greater than the first outside diameter, the second outside diameter and the third outside diameter, such that the annular ring fits axially over the thrust transfer assembly. One or more first torque transfer features are in communication with the second interior surface.

There is disclosed herein a method of assembling the flexible coupling disclosed herein Using the assembly tool disclosed herein. The method includes seating the annular outer member in the housing and engaging the second bearing plate with the annular inner member. The annular inner member is compressed into the outer member by torquing the nut on the threaded rod with the nut bearing on the first bearing plate. The method includes engaging the torque application assembly with locking member and torquing the locking member into the outer member.

### Brief Description of the Drawings

FIG. 1 depicts an isometric cross-sectional view of a low profile flexible coupling according to the present disclosure;
FIG. 2 depicts a partial cross-sectional side view of a flexible coupling according to the present disclosure, joining a pair of conduits;
FIG. 3 depicts a partial cross-sectional side view of a flexible coupling according to the present disclosure, when the flexible coupling angulates about a coupling center point;
FIGS. 4A-4C depict enlarged detailed views of three seal ring assemblies compatible with the coupling of FIG. 3;
FIG. 5 depicts a pressure distribution throughout a coupling according to the present disclosure including pressure balanced internal coupling resistance distribution;
FIGS. 6A-6C depict internal seal pressure loads and flow and spring resistance loads on the coupling of FIG. 5;
FIG. 7 depicts a full cross-sectional side view of the flexible coupling of FIG. 3;
FIG. 8 depicts a cross sectional perspective view of the flexible coupling for high temperature and pressure operation of the present invention;
FIG. 9 is a partial cross sectional view of the flexible coupling of FIG. 9;
FIG. 10 is an enlarged cross sectional view of a portion of the flexible coupling of FIG. 9;
FIG. 11 is an enlarged cross sectional view of detail B of FIG. 10;
FIG. 12 is an enlarged cross sectional view of detail A of FIG. 10;
FIG. 13 is an enlarged cross sectional perspective view of the first seal ring assembly of the flexible coupling of FIG. 11;
FIG. 14 is an enlarged cross sectional perspective view of the first seal ring assembly of the flexible coupling of FIG. 12;
FIG. 15 is a cross sectional view of the flexible coupling of FIG. 9 annotated with force vectors and a pressure drop graph illustrating pressure drop of leakage flow;
FIG. 16 is an enlarged cross sectional view of the flexible coupling of FIG. 9 annotated with force vectors and arrows indicating the flow path of leakage flow;
FIG. 17 is an enlarged view of the first seal ring assembly of FIG. 11, annotated with force vectors;
FIG. 18 is an enlarged view of the second seal ring assembly of FIG. 12, annotated with force vectors;
FIG. 19 is a cross sectional view of the flexible coupling of FIG. 9 shown in an angularly misaligned state and connected to two ducts;
FIG. 20 is a perspective view of a tool for assembling the flexible couplings of FIGS. 1-19;
FIG. 21 is a cross sectional view of the tool of FIG. 20;
FIG. 22 is a perspective view of the tool of FIG. 20 shown with an exploded view of the flexible coupling of FIGS. 8-19 thereon; and
FIG. 23 is a cross sectional view of the tool and flexible coupling of FIG. 22.

### Detailed Description

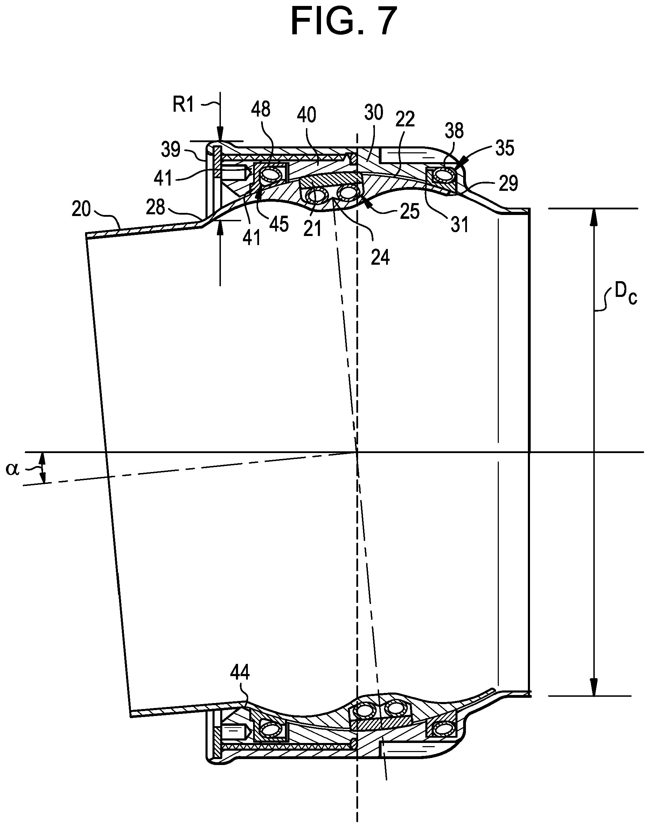

An object of this disclosure is to provide a low profile flexible coupling that, by diameter, fits tighter installation envelope than the coupling disclosed in prior art U.S. 6,880,863, while providing a flexible joining means between a pair of conduits for transfer of pressurized gas. Specifically, the object of this disclosure is to simplify the structure of the coupling itself, while providing dynamic sealing with minimal flow disturbances. The tighter installation envelope can be evaluated by comparing the coupling radial thickness R1 to the conduit diameter D_{C} (both depicted in FIG. 7). In the embodiments disclosed herein, the profile ratio PR of the coupling thickness to the conduit diameter (R1/D_{C}) is approximately 0.135.

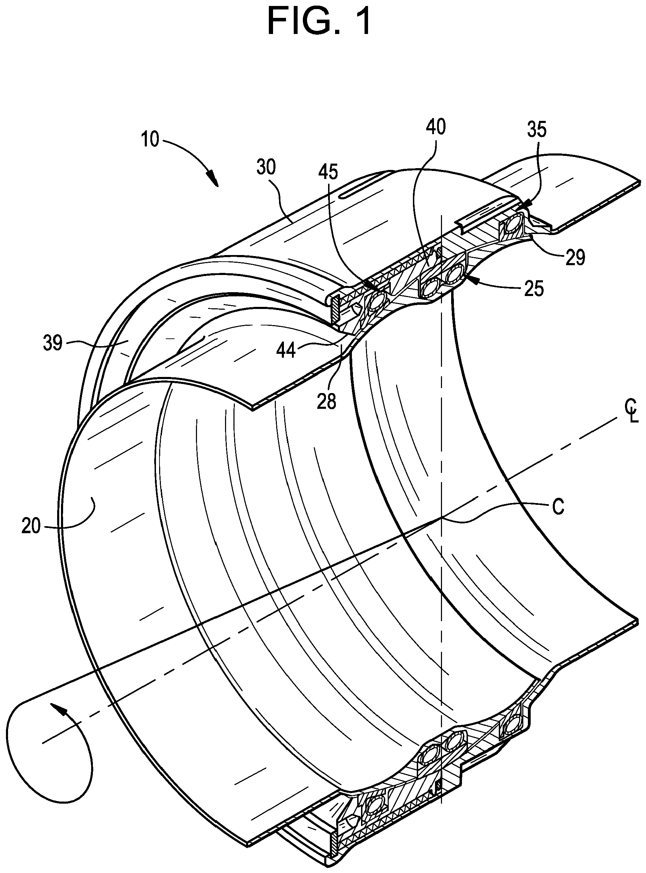

Referring to FIG. 1, a flexible coupling generally denoted by the number 10, provides an apparatus for joining a pair of conduits to one another, and to transfer and seal gases in the couplings between the conduits. The flexible coupling 10 employs a first seal ring assembly 25, a second seal ring assembly 3 5 and a third seal ring assembly 45, each of which can be disassembled and reassembled. This allows for changing seal rings that are employed in the first seal ring assembly 25, the second seal ring assembly 35 and the third seal ring assembly 45 without having to remove the coupling 10 from the conduits. In one embodiment, pressurization of the first seal ring assembly 25, the second seal ring assembly 35 and the third seal ring assembly 45 by the gas flowing through the conduits ensures containment of the flowing gas within the flexible coupling 10. This pressurization is the main seal system energizer acting against the seal inner surfaces, providing a dynamic seal characteristic. The first seal ring assembly 25, the second seal ring assembly 35 and the third seal ring assembly 45 have enhanced ability to resist damage due to mechanical vibrations, thermal stress and static and dynamic loads in pneumatic systems to which the coupling 10 may be exposed.

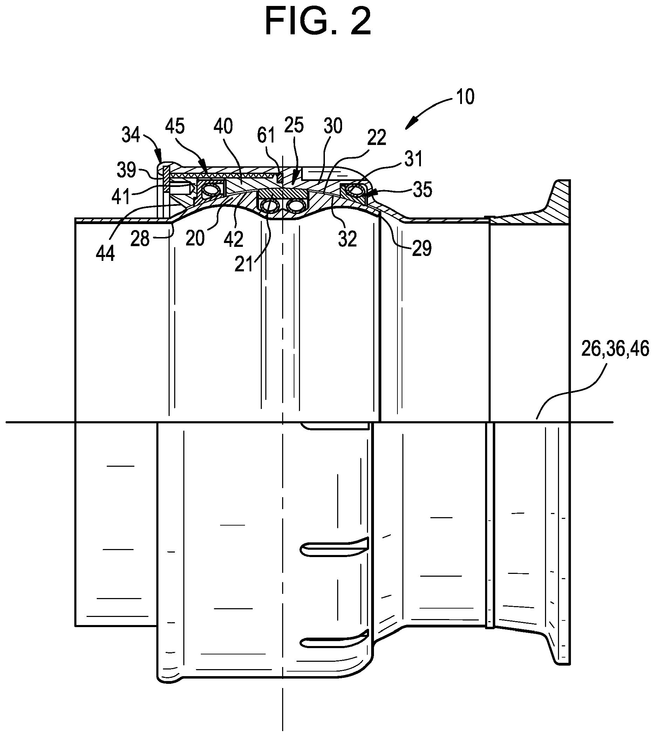

Referring to FIG. 2, the low profile flexible coupling 10 installed in low temperature / low pressure pneumatic systems provides for containment of the gas flowing between first and second conduits. Low temperature / low pressure pneumatic systems include, but are not limited to, operating temperatures up to 600°F and operating pressures up to 200 PSI. The coupling 10 includes an annular inner member 20 (e.g., a hollow ring carrier) defining a spherically shaped, convex seal receiving surface 22 that faces radially outward. An annular outer member 30 (e.g., a hollow housing) is also included. The outer member 30 is assembled over the inner member 20. The outer member 30 defines a spherically shaped first concave seal receiving surface 32 that faces radially inward. The spherically shaped first concave seal receiving surface 32 conforms in shape to the convex seal receiving surface 22. A locking member 40 (e.g., a structural coupling member or an annular locking nut). The locking member 40 is assembled over the inner member 20 and is positioned between the inner member 20 and the outer member 30. The locking member has a spherically shaped second concave seal receiving surface 42 that is radially inward facing. The spherically shaped second concave seal receiving surface 42 conforms in shape to the convex seal receiving surface 22. The locking member 40 is secured and assembled to the outer member 30 by a threaded connection. The locking member 40 mates with the outer member 30 by engaging complementary threaded engagement surfaces in the form of male threads 67 and female threads 68, which simplifies assembly and disassembly, provides fewer points of failure and allows the flexible coupling 10 to occupy a smaller physical space than other dynamic sealing couplings. This is the only threaded engagement in the flexible coupling 10, minimizing the number of threaded engagement surfaces.

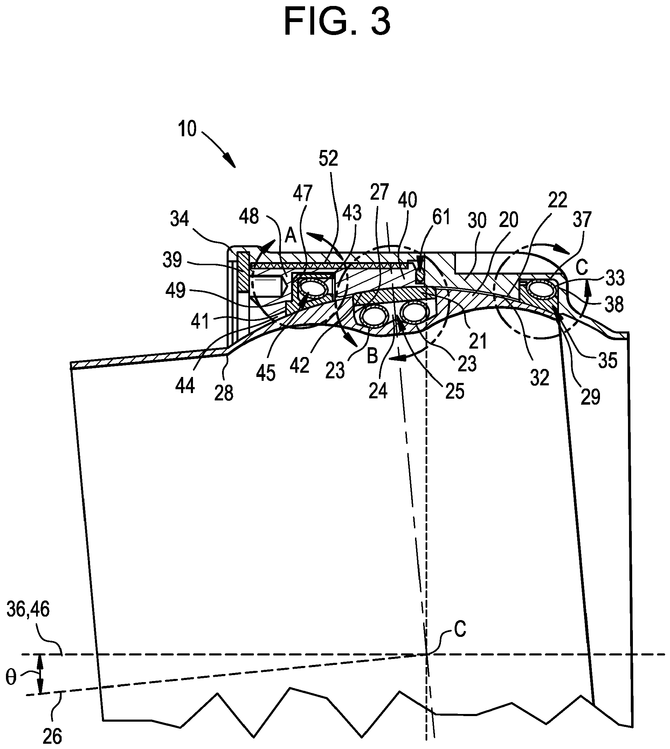

As shown in FIG. 7, the coupling 10 has a profile ratio PR of coupling thickness R1 to conduit diameter D_{C} (i.e., R1 divided by D_{C}). In one embodiment the profile ratio PR is approximately 0.135. In one embodiment the profile ratio PR is from 0.10 to 0.15. The locking member 40 is secured from unwinding or axial disassembly by employing a retainer ring 39, which is installed into a retaining ring groove 34 formed in an inside surface of the outer member 30 and extending radially outward from the inside surface of the outer member and extends circumferentially around the outer member 30. The first and second concave seal receiving surfaces 32, 42 are fixed relative to one another and are movable in a conical-like manner relative to the convex seal receiving surface 22 about a common center point C (depicted in FIG. 3).

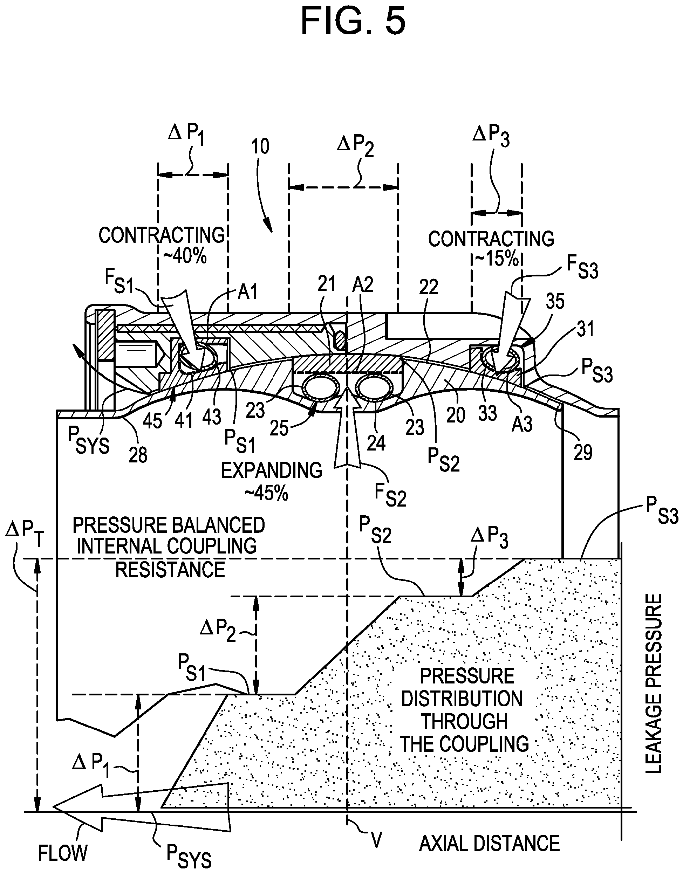

Referring to FIG. 3, the inner member 20 of the coupling 10 defines a circumferentially and radially inward extending seal ring assembly groove 24, which opens radially outward toward the first and second concave seal receiving surfaces 32, 42 of the outer member 30 and the locking member 40, respectively. The outer member 30 defines a first radially outward extending seal ring assembly groove 38 that opens radially inward toward the convex seal receiving surface 22 and retains the seal ring assemblies 35 that is acting predominantly in a contracting radial direction. The locking member 40 defines a second radially outward extending seal ring assembly groove 48 that opens radially inward toward the convex seal receiving surface 22. The second radially outward extending seal ring assembly groove 48 accommodates a structural seal ring assembly 45 that also exerts a contracting radial force when the pneumatic system is under operating conditions and pressurized. The seal assembly structure and function is discussed in detail below, with reference to FIGS. 5-6C. The radially inward extending seal ring assembly groove 24 opens toward the first and second concave seal receiving surfaces 32, 42 of the outer member 30 and the locking member 40, respectively. In the embodiment depicted in FIGS. 1-7, the radially inward extending seal ring assembly groove 24 is entirely defined by the inner member 20, the first radially outward extending seal ring assembly groove 38 is entirely defined by the outer member 30 and the second radially outward extending seal ring assembly groove 48 is entirely defined by the locking member 40. This allows for increased efficiency and elimination of any additional points of potential leakage around the first seal ring assembly 25, the second seal ring assembly 35 and the third seal ring assembly 45.

Referring to FIGS. 2 and 3, the radially inward extending seal ring assembly groove 24, the first radially outward extending seal ring assembly groove 38 and the second radially outward extending seal ring assembly groove 48 are parallel and spaced apart from one another when the centerlines of each member are colinear. The inner member 20 surrounds an inner centerline 26, the outer member surrounds an outer centerline 36 and the locking member 40 surrounds a structural centerline 46. In the embodiment depicted in FIG. 3, the conduits are angled such that the outer centerline 36 and the structural centerline 46 are colinear; the inner centerline 26 is canted a conical angulation angle of θ degrees relative to the outer and structural centerlines 36, 46; and all three centerlines 26, 36, 46 intersect at coupling center point C. The seal ring assembly centerlines 26, 36, 46 intersect at a common coupling center point, regardless of operative orientation of the coupling members relative to one another. In the embodiment depicted in FIG. 2, all three centerlines 26, 36, 46 are colinear. The flexible coupling 10 is configured to conical angulation for structural and installation misalignments ±5° and up to ±10°, bending articulations under system dynamic loads and vibrations and available axial rotation of 360° to yield system axial torque.

The first seal ring assembly 25 is disposed in the radially inward extending seal ring assembly groove 24, the second seal ring assembly 35 is disposed in the first radially outward extending seal ring assembly groove 38 and the third seal ring assembly 45 is disposed in the second radially outward extending seal ring assembly groove 48. In each of first seal ring assembly 25, the second seal ring assembly 35 and the third seal ring assembly 45 there is a seal made of thermal plastic, a seal energizer in the form of the canted spring and each seal projects out of a corresponding one of the radially inward extending seal ring assembly groove 24, the first radially outward extending seal ring assembly groove 38 and the second radially outward extending seal ring assembly groove 48.

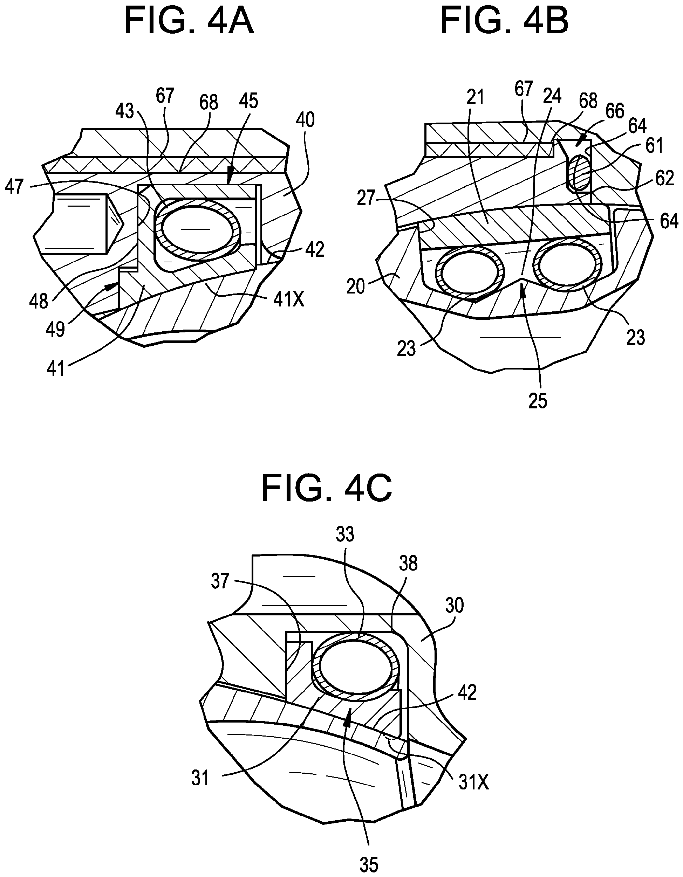

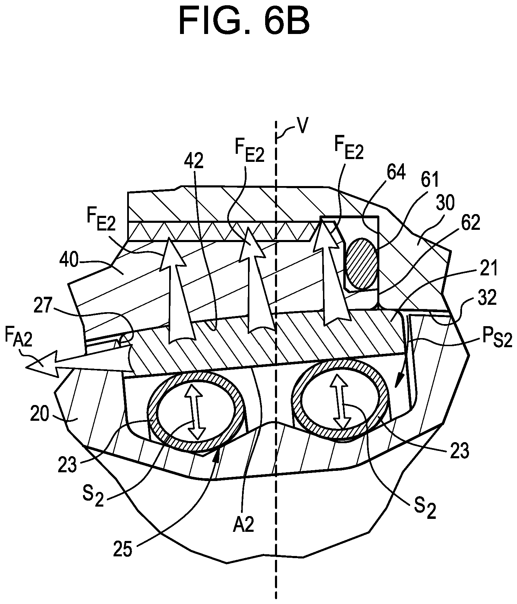

Each of the first seal ring assembly 25, the second seal ring assembly 35 and the third seal ring assembly 45 includes a spherically shaped bearing surface, which conforms to and engages an opposing one of the convex seal receiving surface 22 of the inner member 20, a spherically shaped first concave seal receiving surface 32 of the outer member 30 and a spherically shaped second concave seal receiving surface 42 of the locking member 40, respectively. There are two modes of operation of the system. In a static mode the system is not pressurized and in an operating mode the system is pressurized and the seal energizers contribute to the forces generated by the pressurization. In the depicted embodiment, an O-ring shaped seal 61 is assembled axially between the outer member 30 and the locking member 40 to provide a seal for the threaded engagement surfaces 67, 68. In the depicted embodiment, a void 66 (denoted in FIGS. 4B and 6B) is formed between an inner locking shoulder 62 of the locking member 40 and an outer member shoulder 64 of the outer member 30. Other embodiments omit this seal 61 or incorporate it into alternate voids in the outer member 30 and/or locking member 40. In some embodiments, all of the seal ring assemblies have the same arrangement of seal(s) and/or seal energizer(s). In some embodiments, the same seal ring assembly is disposed in two of the grooves and a different seal ring assembly is disposed in the third groove.

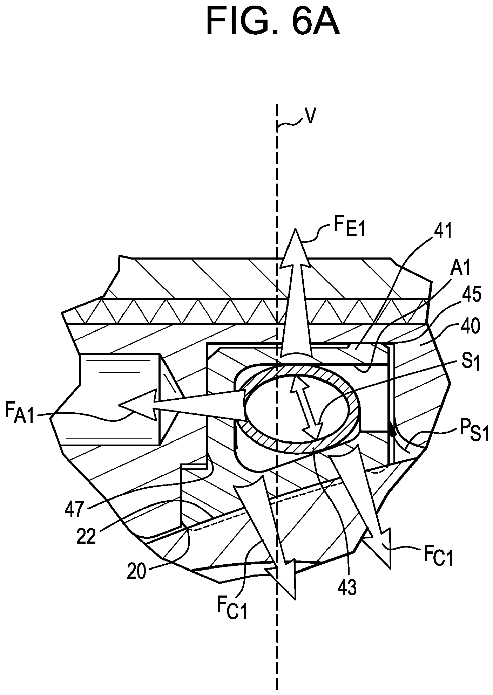

Referring to FIGS. 3 and 4A, the third a seal ring assembly 45 includes a C-shaped seal 41 installed into the second radially outward extending seal ring assembly groove 48 of the locking member 40. This C-shaped seal 41 contains a seal energizer in the form of a canted spring 43 installed in a cavity defined by the shape of the C-shaped seal 41. The C-shaped seal 41 is energized by the spring 43 and first leakage pressure P_{S1} (depicted in FIG. 6A). The depicted C-shaped seal 41 includes a reinforcement step 49 to provide additional structural stability. In the embodiment depicted in FIG. 4A, an inner edge 41X of the C-shaped seal 41 engages and seals against the second concave seal receiving surface 42 via an interference fit.

Referring to FIGS. 3 and 4B, radially inward extending seal ring assembly groove 24 is located centrally between opposing axial ends of the inner member 20. In some embodiments, the radially inward extending seal ring assembly groove 24 is located axially intermediate the first radially outward extending seal ring assembly groove 38 and the second radially outward extending seal ring assembly groove 48. The first seal ring assembly 25 includes two seal energizers in the form of canted springs 23 and a convex seal ring with spherical crown 21. The first seal ring assembly 25 is energized by canted springs 23 acting outwards against the crown 21 and subject to second leakage pressure P_{S2} (depicted in FIG. 6B).

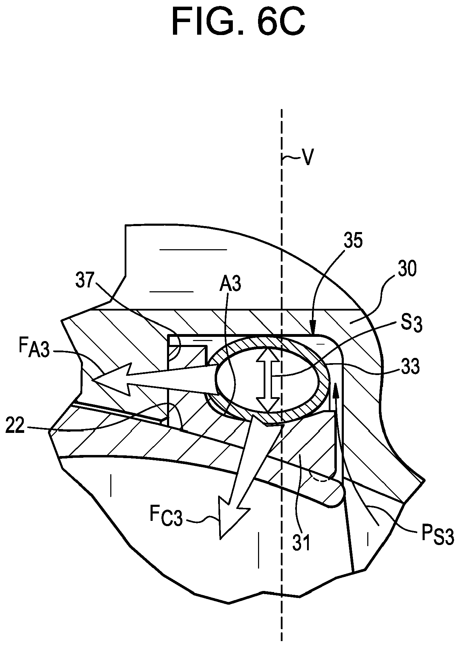

The third seal ring assembly 35 depicted in FIGS. 3 and 4C includes an L-shaped seal 31 and one spring energizer in the form of a canted spring 33 acts simultaneously inward and axially against an outer shoulder 37 of the outer member 30 and the seal ring assembly 35 is subject to third leakage pressure P_{S3} (depicted in FIG. 6C). In the embodiment depicted in FIG. 4C, an inner edge 31X of the L-shaped seal 31 engages and seals against the second concave seal receiving surface 42 via an interference fit.

Referring to FIG. 5, during system operation, when seals are exposed to system pressure in the operating mode, the seal assemblies are pressure balanced, providing approximately 45% expanding seal force F_{S2} and 55% of contracting seal pressure (total of contracting seal forces F_{S1}, F_{S3}). In the depicted embodiment, the contracting forces F_{S1},F_{S3} are canted relative to vertical line V and the expanding force F_{S2} acts along the vertical line V. This equalizes internal coupling loads and minimizes internal stresses within coupling components. Moreover, the seal energizers provide static load to thermal plastic seals which resists the system vibrations and dynamic loads that carbon seals or bellows based prior art seal are not capable of or are significantly limited to in such an operational environment. In the depicted embodiment, the pressure distribution of fluid that leaks between the inner member 20 and the outer member 30 and locking nut 40 decreases in the direction of fluid flow. Therefore, to maintain the pressure-forces balanced within the coupling 10 the seal inner operational surfaces (surfaces exposed to system pressure) are increased as pressure through the coupling decreases. The first seal in the flow path is the L-shaped seal 31, which has a smaller surface A3 that is exposed to the highest leakage pressure of the three seal assemblies because it is the first assembly in the fluid flow path. The last seal in the flow path is the C-shaped seal 41 and it has the largest seal surface A1 exposed to the lowest pressure. The surface area A2 of the first seal ring assembly 25 is between A1 and A3 in magnitude, because it is subject to a leakage pressure between those occurring at the first and second radially outward extending seal ring assembly grooves 38, 48, respectively.

FIGS. 6A-6C depict the pressure loads and seal energizing forces within the three seal assemblies of FIG. 5 in greater detail. In FIG. 6A, the canted spring 43 exerts opposing forces S1 on the C-shaped seal 41. This results in radial and axial forces on the locking member 40, that oppose a canted force on the convex seal receiving surface 22 of the inner member 20. In FIG. 6B, canted springs 23 exert opposing forces on the crown 21 and an inner surface of the radially inward extending seal ring assembly groove 24. This results in outwardly directed forces on the first and second concave seal receiving surfaces 32, 42. In FIG. 6C, the canted spring 33 exerts opposing forces, angled relative to vertical line V, on an inner surface of the first radially outward extending seal ring assembly groove 38 and on the L-shaped seal 31. The canted springs 23, 33, 43 form a dampening system for couplings subject to internal vibrations in a static mode when the pneumatic system is not pressurized and during an operating or dynamic mode when the system is under pressure. The dampening system disclosed herein, resists dynamic and static system loads. In one embodiment, the spring forces S1, S2 and S3 generate forces that are 5-10% of the total force generated by the leakage pressures P_{S1}, P_{S2}, P_{S3}.

Referring to FIGS. 5-6C, the aforementioned system leakage pressure P_{S1}, P_{S2}, P_{S3} contribute to the aforementioned dynamic system loads at each seal ring assembly. Referring to FIG. 5, a portion of the fluid flowing through the conduits leaks between the inner member 20, the outer member 30 and the locking nut 40. This fluid moves along the dashed arrows in FIG. 5, entering the leakage path at an entry pressure or third leakage pressure of P_{S3} as it enters the seal ring assembly 35 and flows into the cavity formed by the L-shaped seal 31. The pressurized fluid and spring 33 exert a force F_{S3} on the surface area A3, depicted with a dashed L-shaped line in FIG. 5, of the L-shaped seal 31 and the leakage pressure decrease by an amount ΔP₃ as it passes through the seal ring assembly 35. A portion of the fluid moving along the dashed arrows continues to leak along the convex sealing surface 22 and ultimately between the crown 21 and the radially inward extending seal ring assembly groove 24 at a second leakage pressure P_{S2}. The leakage pressure decreases from P_{S2} by an amount ΔP₂ as it passes through the first seal ring assembly 25. The leakage fluid within the first seal ring assembly 25 and the springs 23 exert an expanding radial force F_{E2} on the surface area A2, depicted with a straight dashed line in FIG. 5, of the crown 21 and an axial force F_{A2} on the inner shoulder 27. A portion of the fluid moving along the dashed arrows continues to leak along the convex seal receiving surface 22 and enters the structural seal ring assembly 45 at a first leakage pressure P_{S1}. The leakage pressure decreases as it passes through the structural seal ring assembly 45 by an amount ΔP₁ and it ultimately leaks at a pressure of P_{SYS}. In the depicted embodiment, P_{SYS} is the ambient pressure. The leakage pressure at each successive seal in the flow path decreases such that P_{S3} > P_{S2} > P_{S1} > P_{SYS}. The resulting forces generated by the first seal ring assembly 25, second seal ring assembly 35 and the third seal ring assembly 45 are depicted by the vectors F_{S2}, F_{S3} and F_{S1}, respectively. The internal forces and structure of each of the first seal ring assembly 25, the second seal ring assembly 35 and the third seal ring assembly 45 are discussed in detail below with respect to FIGS. 6A-6C.

In FIGS. 5 and 6A, fluid at the first leakage pressure P_{S1} flows between the C-shaped seal 41 and the locking member 40 along the dashed arrows. The pressurized fluid and the spring 43 exert opposing forces on the surface area A1, depicted as a C-shaped dashed line in FIG. 5, of the C-shaped seal 41. This results in an expanding radial force F_{E1} and axial force F_{A1} on the locking member 40 and contracting radial forces F_{C1} on the convex seal receiving surface 22 of the inner member 20. In the depicted embodiment, the axial force F_{A1} acts against structural shoulder 47. In FIG. 6B, fluid at a second leakage pressure P_{S2} flows between the crown 21 and the radially inward extending seal ring assembly groove 24. The pressurized fluid and springs 23 exert a force on the surface area A2 the crown 21. This results in radially outwardly directed forces F_{E2} on the first and second concave seal receiving surfaces 32, 42, of the outer member 30 and the locking member 40, respectively. In addition, a seal side surface next to the pressure inlet is loaded creating the axial portion of the seal force F_{A2} against the inner shoulder 27. In FIG. 6C, fluid at a third leakage pressure P_{S3} flows between the L-shaped seal 31 and the first radially outward extending seal ring assembly groove 38. The fluid and the spring 33 exert radially contracting forces F_{C3}, angled relative to vertical line V, on the convex seal receiving surface 22 of the inner member 20 and axial force F_{A3} on the outer shoulder 37 of the outer member 30. In the depicted embodiment, F_{S3} = P_{S3} · A3; F_{S2} = P_{S2} · A2; and F_{S1} = P_{S1} · A1. Where the sum of F_{S3} and F_{S1} approximately equals F_{S2}, which pressure balances the internal coupling loads by the operating seal surfaces having different areas creating the desired pressure distribution throughout the seals. In the depicted embodiment, the approximate surface areas of the seals in comparison to one another is 40% of the total seal surface area for A1, 40% of the total seal surface area for A2 and 20% of the total seal surface area for A3. This results in a pressure distribution from an initial 100% as follows: P_{S3} = 100% > P_{S2} ∼ 85% > P_{S1} ∼ 40%.

Referring to FIG. 7, a maximum angulation angle α is defined based on the structure of the inner member 20, the outer member 30 and the locking member 40. The convex seal receiving surface 22 of the inner member 20 extends from a first end 28 adjacent a hollow cylindrical wall to a second end 29. The axial length and diameter of the inner member 20 are specifically chosen such that when the second end 29 reaches the seal ring assembly 35, the first end 28 abuts an abutment surface 44 formed on an edge of the locking member 40. The abutment surface 44 tapers radially and axially inward from an outer axial end of the locking member. The abutment surface transitions into an axial end of the second radially outward extending seal ring assembly groove 48. This allows the locking member 40 to extend over the structural seal ring assembly 45. The locking member 40 retains the structural seal ring assembly 45 and moveably secures the structural seal ring assembly 45 to the inner member 20 and the outer member 30. The abutment surface 44 prevents the inner member 20 from moving beyond the maximum angulation angle α. The angulation is limited in this manner to retain the seal ring assembly 35 within the first radially outward extending seal ring assembly groove 38 and to prevent leakage above desired levels.

The locking member 40 is accessible even when the coupling 10 is fully assembled via an axial opening between the outer member 30 and the inner member 20. The outer member 30 axially extends over the locking member 40 to form this axial opening. The locking member 40 directly engages the outer member 30 via female threads 68 extending from the outer member 30 engaging complementary male threads 67 extending from the locking member 40. In the depicted embodiment, the locking member 40 defines the entirety of the second radially outward extending seal ring assembly groove 48, ensuring that the remaining leakage is contained and utilized to increase the third seal assembly force F_{S3}, as discussed above.

Component and subassembly joining techniques include but are not limited to: welding, brazing, swaging, clamping and bolting. Inspection methods include but are not limited to: CMM (Coordinate Measure Machine), FPI (Fluorescent Penetrant Inspection), X-Ray and Ultrasound.

Environmental conditions for a low profile flexible coupling 10 according to the present disclosure in low temperature / low pressure pneumatic systems are: operating temperature up to 600°F; operating pressure up to 200 PSI, but not limited; system loads resistance 200 Lbf per inch of duct diameter, but not limited; system accelerations under dynamic loads 40g, but not limited; system vibrations: frequency 5 - 2000 Hz; system vibrations: typical peak-to-peak amplitude 1.0"-0.0001".

Articulation characteristics for a low profile flexible coupling 10 according to the present disclosure in low temperature / low pressure pneumatic systems are: Conical angulation for structural and installation misalignments ±5° and up to ±10° for extreme applications; bending articulations under system dynamic loads and vibrations; and available axial rotation of 360° to yield to system axial torque.

The flexible coupling 10 according to the present disclosure has broad installation compatibility. Available joint structural components materials include but are not limited to: stainless steels, titanium alloys, Inconel alloys or aluminum alloys, which allow joining by welding, brazing or swaging with any ducting material combination. The flexible coupling 10 is compatible with: standard AS1895 V-Band type flanges; custom flanges or structures that integrate with existing system configurations; and forming joining techniques. In some embodiments, seal materials used in flexible couplings are thermal plastics including variety of Teflon composites or other commercial materials such as PTFE (Polytetrafluoroethylene) with 10% Ekonol and several Fluorosint types. In some embodiments, the springs are made out of Inconel alloys.

A unique assembly procedure and seal installation technique for the coupling 10 in low temperature / low pressure pneumatic systems is also disclosed herein. Inwardly oriented grooves receive contracting seal assemblies that are heart or kidney shaped prior to installation with special groove depth calculation and design, to allow such an installation.

The low profile flexible coupling 10 according to the present disclosure in low temperature / low pressure pneumatic systems can be incorporated into typical ducting for aircraft and engines low-temperature / low pressure pneumatic systems.

Benefits of the low profile flexible coupling 10 according to the present disclosure include, but are not limited to: extended life and reliability; wide articulation ranges; increased system load resistance; increased system vibration resistance; elimination of load transfer between system sides; an improved yield axial torque between system sides; minimizing or fully eliminating flow disturbance; providing custom and adjustable internal coupling stiffness and bending moments; providing custom design for joining techniques and system integration; providing custom design for extreme loads and articulations when required; the seals are field replaceable without coupling cutting, system removal, special tooling or a shop; the seal leakage characteristics are well within requirements; the seal has low wear and friction characteristics; and the seal has low installation forces.

In some embodiments, the low profile flexible coupling 10 utilizes retaining techniques and devices that are within coupling structural members, outside and away from a fluid flow path. As a result, there are no flow disturbances as would be common in OEM couplings where Gimbal joints or coupled ribs are used inside of the couplings and within the fluid flow path.

In one embodiment, the maximum operating temperature is limited at 600°F. In some embodiments this maximum operating temperature is limited by the material used, such as thermoplastics.

The structure of the inner member 20, the outer member 30 and the locking member 40 of the coupling 10 including the first seal ring assembly 25, second seal ring assembly 35 and the third seal ring assembly 45 allows the tolerances of the stackup of the assembly to be controlled to a much greater degree than is possible with prior art assemblies. The first seal ring assembly 25, second seal ring assembly 35 and the third seal ring assembly 45 take up a smaller footprint than prior art seal assemblies by using the leakage between the bearing surfaces that is inherent to the assembly to strengthen the sealing forces at each of the first seal ring assembly 25, second seal ring assembly 35 and the third seal ring assembly 45. The limitation of a threaded engagement only between the outer member 30 and locking member 40 precludes additional leakage paths through threaded engagement areas.

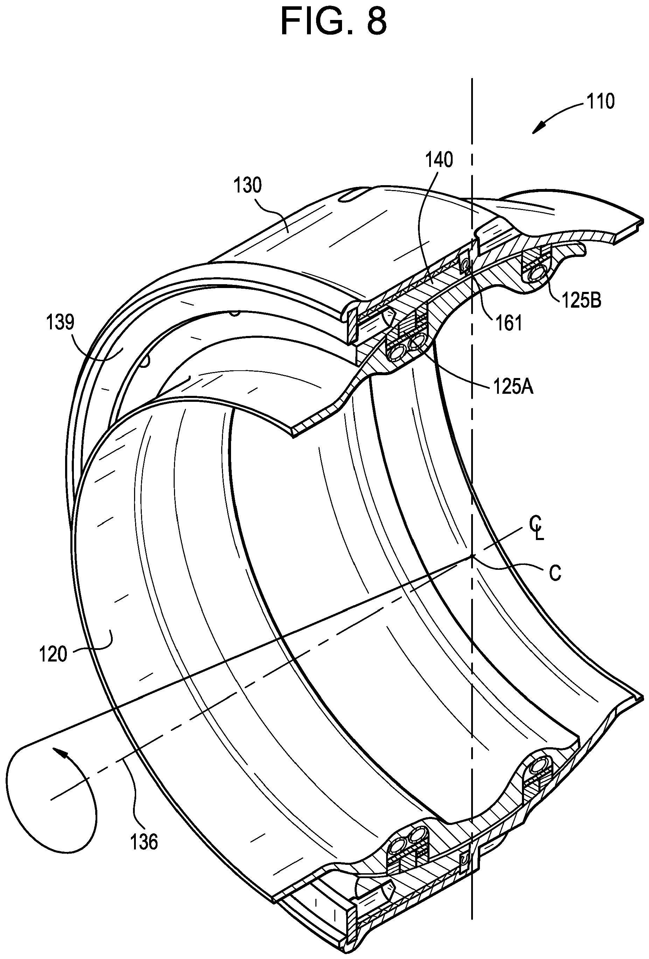

Referring to FIGS. 8-19 a low profile flexible coupling for high temperature and high pressure applications is generally designated by the element number 110. The flexible coupling 110 is similar to the flexible coupling 10. Therefore, components of the flexible coupling 110 are designated with element numbers similar to those employed in FIGS. 1-7 for the flexible coupling 10, but adding the numeral 1 as a prefix. The flexible couplings 110 for high temperature / high pressure pneumatic systems are capable of operation at temperatures greater than 600°F (e.g., 1500°F and greater) and at pressures greater than pressure of 200 PSI (e.g., 1500 PSI and greater).

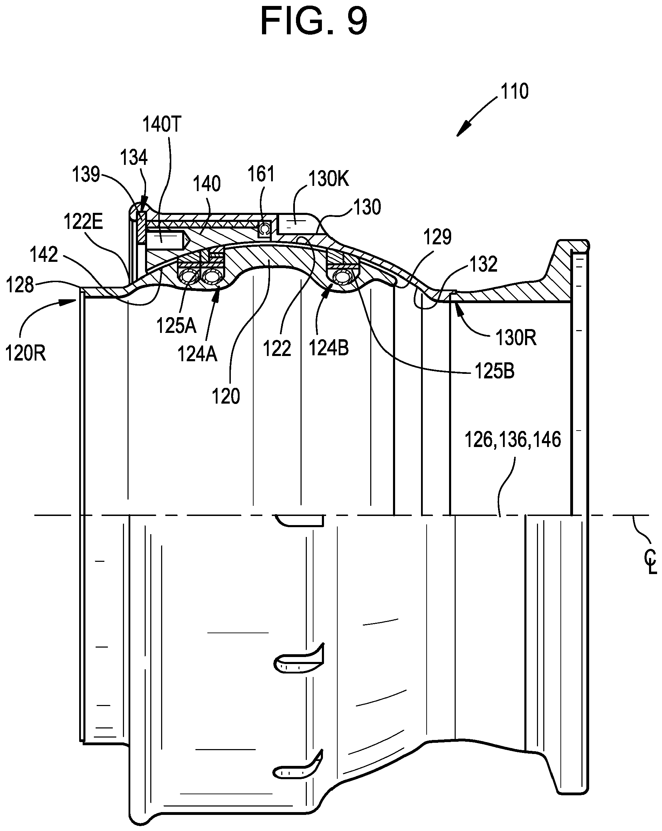

As shown in FIGS. 8 and 9, the low profile flexible coupling 110 for high temperature and high pressure pneumatic systems to provide transfer of a gas between first and second conduits includes an annular inner member 120 centered on an axial centerline CL, 126 and defining a spherically shaped convex seal receiving surface 122 extending from a first end 128 to a second end 129. The inner member 120 is interrupted by a first radially inward extending seal ring assembly groove 124A that extends circumferentially around the inner member 120 and extends radially inward from the convex seal receiving surface 122. The inner member 120 is interrupted by a second radially inward extending seal ring assembly groove 124B that extends circumferentially around the inner member 120 and extends radially inward from the convex seal receiving surface 122.

As shown in FIG.8, the low profile flexible coupling 110 includes an annular outer member 130 centered on a centerline 136 and assembled over the inner member 120. The outer member defines a spherically shaped first concave seal receiving surface 132 conforming to the spherically shaped convex seal receiving surface 122.

As shown in FIG. 8, FIG. 9 and FIG. 10, the low profile flexible coupling 110 includes a locking member 140 (e.g., an annular locking nut with a male thread) assembled over the inner member 120. The locking member 140 defines a spherically shaped second concave seal receiving surface 142. The spherically shaped second concave seal receiving surface 142 conforms to and engages the spherically shaped convex seal receiving surface 122. The outer member 130 is positioned over (e.g., around or surrounds) the locking member 140. The inner member 120 includes a radially outward extending depression 120C on an inside surface 120K of the inner member 120. The depression is located between the first radially inward extending seal ring assembly groove 124A and the second radially inward extending seal ring assembly groove 124B and has a smooth contour to minimize pressure drop through the flexible coupling 110. The depression 120C also assists in reducing the weight of the flexible coupling 110.

In one embodiment, a retainer ring 139 is installed into a radially inward opening retainer ring groove 134 formed in the outer member 130 and extending circumferentially around an inner surface 130Q. The retainer ring groove 134 having a first axial side wall 134A and a second axial side wall 134B with a base 134C extending therebetween.

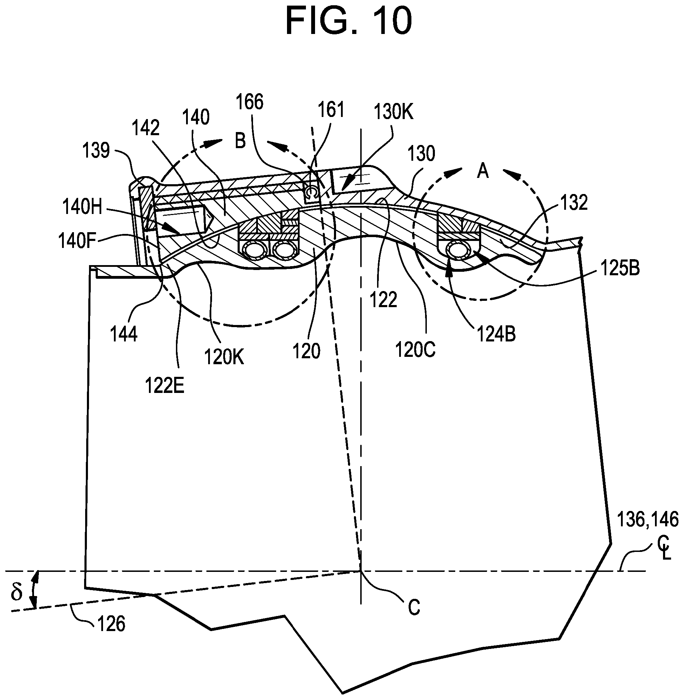

As shown in FIG. 10, in one embodiment, the locking member 140 has an abutment surface 144 formed on an edge of the locking member 140. The abutment surface 144 abuts against the first end 122E of the convex seal receiving surface 122 at a maximum angulation angle δ. The locking member 140 has an axial retaining surface 140F on an axial end thereof

As shown in FIG. 10, the spherically shaped first concave seal receiving surface 132 is axially centered around a centerline 136. The spherically shaped second concave seal receiving surface 142 is centered around a center line 146. The convex seal receiving surface 122 is centered around a centerline 126. In an aligned state the centerlines 126, 136 and 146 are coaxial with the center line CL. The convex seal receiving surface 122 is movable relative to the first concave seal receiving surface 132 and the second concave seal receiving surface 142 about a common center point C. In a misaligned state, the center line 126 is at the maximum angulation angle δ relative to the centerlines CL, 136 and 146. In one embodiment, the flexible coupling 110 is configured for a maximum angulation angle δ of 5 degrees about the centerlines CL, 136 and 146 (in other words, a conical maximum angulation of 5 degrees surrounding the centerlines CL, 136, 146). In one embodiment, the flexible coupling 110 is configured for a maximum angulation angle δ of 10 degrees about the centerlines CL, 136 and 146. In one embodiment, the maximum angulation angle δ of the flexible coupling 110 is adjustable to establish a set maximum angulation angle δ. This set maximum angulation angle δ can be less than 1 degree, between 1 degree and 5 degrees, or up to 15 degrees, for example. The adjustment of the maximum angulating angle δ is provided by the gap between the abutment surface 144 of the locking nut member 140 and the first end 122E of the convex seal receiving surface 122 of the inner member 120 (as depicted in FIG. 10). The flexible coupling 110 is configured for bending articulations under system dynamic loads and vibrations and axial rotation of 360° to yield system axial torque.

As shown in FIGS. 8-10, the flexible coupling includes: (a) a first seal ring assembly 125A disposed in the first radially inward extending seal ring assembly groove 124A and/or (b) a second seal ring assembly 125B disposed in the second radially inward extending seal ring assembly groove 124B.

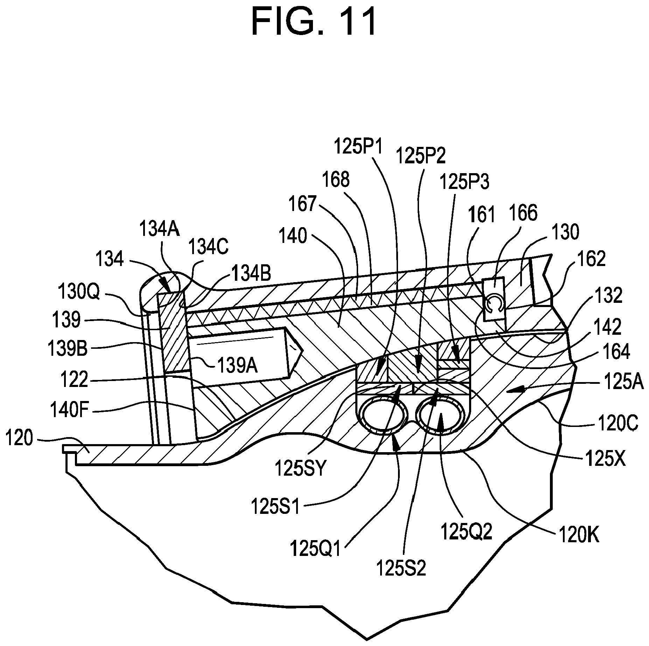

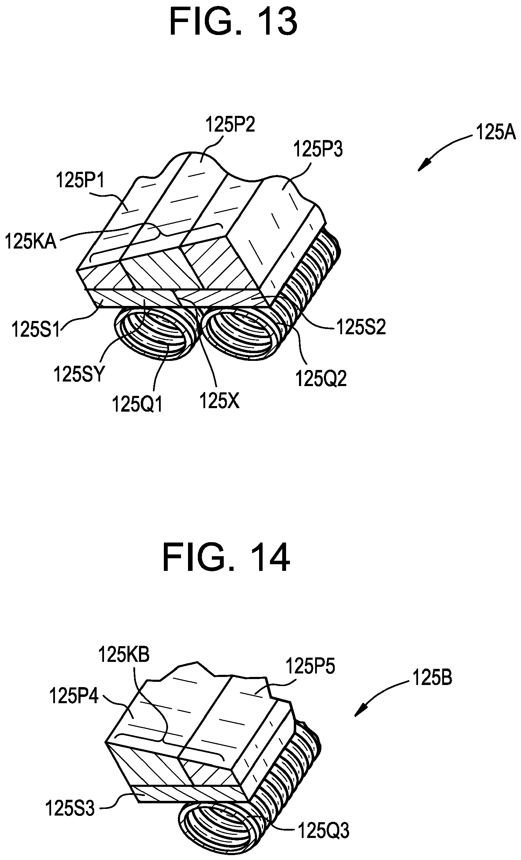

As shown in FIGS. 11 and 13, the first seal ring assembly 125A is a radially outward expanding type assembly that includes: (a) a first primary annular seal segment 125P1, a second primary annular seal segment 125P2 and a third primary annular seal segment 125P3. The second primary seal segment 125P2 is positioned between and axially abuts the first primary seal segment 125P1 and the third primary seal segment 125P3; (b) a first secondary annular seal segment 125S1 and a second secondary annular seal segment 125S2 that axially abuts the first secondary annular seal segment 125S1 at a first abutment interface 125X. The first secondary annular seal segment 125S1 and the second annular seal segment 125S2 are disposed radially inward of the first primary annular seal segment 125P1, the second primary annular seal segment 125P2 and the third primary annular seal segment 125P3. The first abutment interface 125X is positioned along an inside surface 125SY of the second primary seal segment 125P2; and (c) a first biasing ring 125Q1 and a second biasing ring 125Q2 located axially adjacent to one another. In the embodiment depicted in FIGS. 11 and 13 the first biasing ring 125Q1 and the second biasing ring 125Q2 are in the form of annular canted spring energizers. The first biasing ring 125Q1 is positioned radially inward of the first secondary annular seal segment 125S1. The first biasing ring 125Q is configured to urge the first secondary seal segment 125S1, the first primary annular seal segment 125P1 and the second primary annular seal segment 125P2 radially outward against and in sealing engagement with the spherically shaped second concave seal receiving surface 142 of the locking member 140. The second biasing ring 125Q2 is configured to urge the second secondary seal segment 125S2, the second primary annular seal segment 125P2 and the third primary annular seal segment 125P3 radially outward against and in sealing engagement with the spherically shaped second concave seal receiving surface 142 of the locking member 140.

In one embodiment, the first primary annular seal segment 125P1, the second primary annular seal segment 125P2 and the third primary annular seal segment 125P3 cooperate with one another to form a first convex spherical crown 125KA (see FIG. 13) conforming in shape to the spherically shaped second concave seal receiving surface 142 of the locking member 140. The first convex spherical crown 125KA has a radius of curvature that originates from the common center point C.

In one embodiment, the first secondary annular seal segment 125S2 extends axially across the first primary annular seal segment 125P1 and axially across a portion of the second primary annular seal segment 125P2.

In one embodiment, the secondary annular seal segment 125S2 extends axially across the third primary annular seal segment 125P2 and axially across a portion of the second primary annular seal segment 125P2.

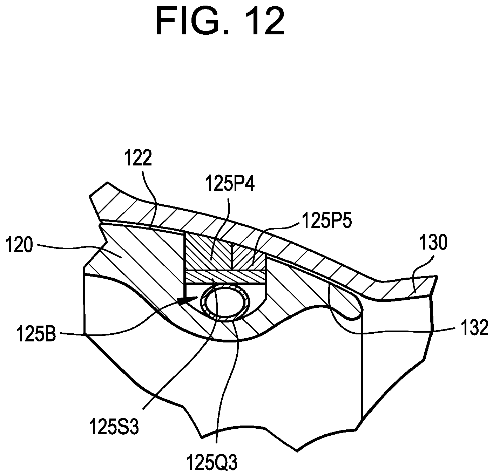

As shown in FIGS. 12 and 14, the second seal ring assembly 125B is a radially outward expanding type assembly that includes: (a) a fourth primary annular seal segment 125P4 and a fifth primary annular seal segment 125P5 axially abutting each other; (b) a third secondary annular seal segment 125S3 disposed radially inward of the fourth primary annular seal segment 125P4 and the fifth primary annular seal segment 125P5; and (c) a third biasing ring 125Q3 positioned radially inward of the third secondary annular seal segment 125S3. In the embodiment depicted in FIGS. 12 and 14 the third biasing ring 125Q3 is in the form of an annular canted spring energizer. The third biasing ring 125Q3 is configured to urge the third secondary seal segment 125S3, the fourth primary annular seal segment 125P4 and the fifth primary annular seal segment 125P5 radially outward against and in sealing engagement with the spherically shaped first concave seal receiving surface 132 of the outer member 130.

In one embodiment, the third secondary seal segment 125S3 extends axially across the fourth primary annular seal segment 125P4 and the fifth primary annular seal segment 125P5.

In one embodiment, the fourth primary annular seal segment 125P4 and the fifth primary annular seal segment 125P5 cooperate with one another to form a second convex spherical crown 125KB (see FIG. 14) conforming in shape to the spherically shaped first concave seal receiving surface 132 of the outer member 130. The second convex spherical crown 125KB has a radius of curvature that originates from the common center point C.

As shown in FIG. 11, in one embodiment, female threads 168 on the outer member 130 engages a complementary male threads 167 on the locking member 140 to secure the locking member 140 to the outer member 130. A void (e.g., axial space) is provided between an inner axial end of the locking member 140 and an axially outwardly facing shoulder of the outer member 130. An annular leakage seal 161 (e.g., a compressible or crushable C-shaped seal or an O-ring) is mounted axially in the void 166 (e.g., a space or gap) between the locking member 140 and the outer member 130 to seal against any leakage through the male and female threads 167 and 168, respectively.

As shown in FIGS. 9, 10, 11 and 12, during assembly of the flexible coupling 110, first flexible seal ring assembly 125A is positioned in the first radially inward extending seal ring assembly groove 124A and the second seal ring assembly 125B is positioned in the second radially inward extending seal ring assembly groove 124B. The inner member 120 is assembled to (e.g., positioned in) the outer member 130 and the annular leakage seal 161 is positioned on the locking member 140. The locking member 140 is threaded into the outer member 130 by engaging the male threads 167 on the locking member 140 with the female threads 168 on the outer member 130. An assembly tool (not shown) engages one or more torque transfer features 140H (e.g., 12 equally circumferentially spaced axial holes extending into the locking member 140 from the an axial retaining surface 140F) in the locking member 140 to torque the locking member into the outer member 130, while another assembly tool (not shown) engages one or more of the anti-rotation features 130K (e.g., 12 equally circumferentially spaced key slots) formed in the outer member 130 to restrain the outer member 130. During the torqueing of the locking ring 140 into the outer member 130 the annular leakage seal 161 is compressed in the void 166 against the shoulder 162 of the outer ring 130 and a shoulder 164 on the locking ring 140.

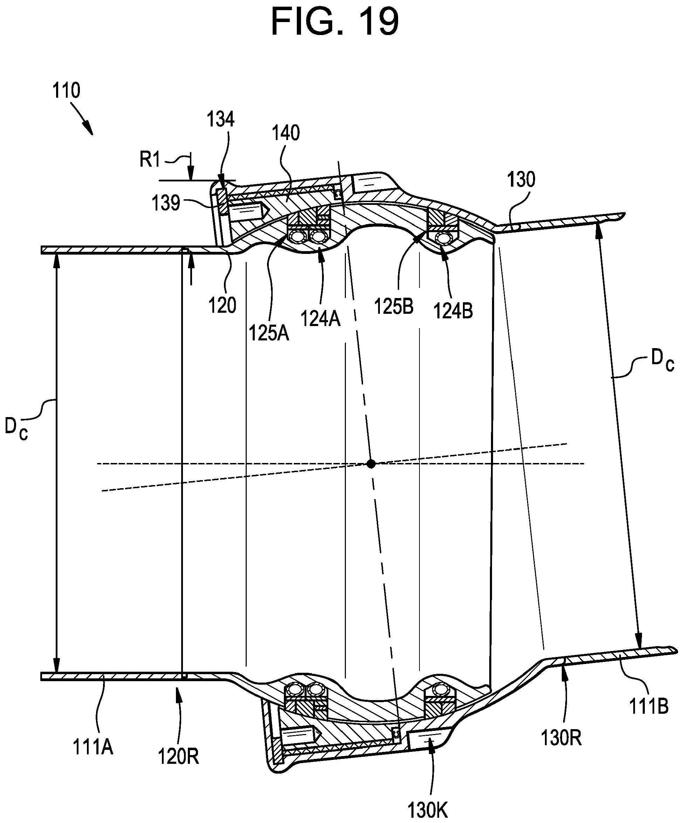

As shown in FIG. 19, the flexible coupling 110 has a profile ratio PR defined by a coupling radial thickness R1 to a conduit diameter (e.g., duct diameter) D_{C}. The profile ratio PR is of a magnitude sufficient to accommodate installation of the flexible coupling 110 within a tight installation window. The coupling radial thickness R1 is defined as the radial thickness of the outer member 130 and the conduit diameter D_{C} is defined as the diameter of the first and/or second conduits (e.g., ducts) 111A and 111B as shown in FIG. 19, respectively. In one embodiment, the profile ratio PR is less than approximately 0.17. In one embodiment, the profile ratio PR is between approximately 0.13 and 0.14. The first conduit 111A is seated in and secured to (e.g., via welding or brazing) a first axial facing receiving area 120R (e.g., a weld lip or shoulder) of the inner member 120. The second conduit 111B is seated in and secured to (e.g., via welding or brazing) a second axial facing receiving area 130R (e.g., a weld lip or shoulder) of the outer member 130.

Another object of this invention is to provide low profile flexible couplings 10, 110 that are simpler than prior art U.S. 6,880,863. The flexible couplings 10, 110 each have 3 (three) structural components compared to the 4 (four) in prior art U.S. 6,880,863. The flexible couplings 10, 110 assemble with one threaded connection (i.e., 2 (two) threads) compared to the two thread connections (i.e., 4 (four) threads) required in the prior art flexible coupling disclosed in U.S. 6,880,863.

This simplified and enhanced design of the flexible couplings 10, 110 positively affect the manufacturability and significantly improves overall cost, positively affecting lead time, material and labor expenses. It also allows the coupling to fit in a smaller NHA (next higher assembly) installation design envelope.

The flexible couplings 10, and 110 have utility in aircraft and engine pneumatic systems, including but not limited to following components, subassemblies, assemblies, ducts, s-ducts, diameter transition ducts, elbows, Y-sections, T-sections, manifolds, manifolds with multiple tube layers. Various flexible coupling system integration and assembly techniques are employed including but not limited to flange connections, multiple hole bolted flanges, threaded flanges, butt welds, integral weld fillers variable positionable static couplings, brackets, linkages, gussets and clevises.

Joining techniques that are employed with the flexible couplings 10, 110 include but are not limited to welding, brazing, swaging, clamping and bolting.

The inner member 120, the outer member 130 and the locking member 140 are made from one or more of 300 or 400 series stainless steel, nickel based alloys (e.g., Inconel 600 Series, Inconel 700 Series, IN 100, Hastelloy Series), Monel 400 Series, Nimonic 263, Rene 41 Series, Waspaloy Series, Udimet-500 cobalt based alloys (e.g., L-605) and titanium alloys (e.g., Ti-6-2-4-2 Series for temperatures below 1000°F).

The first seal ring assembly 125A the second seal ring assembly 125B are manufactured from one or more of nickel based alloys (e.g., Inconel 700 Series, Hastelloy Series, Monel K500, Nimonic 263, Rene 41 Series, Waspaloy Series, Udimet-500), ferrous alloys (e.g., Nitronic 60), cobalt based alloys (e.g., Stellite Series, L-605, and copper based alloys (e.g., brass). In one embodiment, the first seal ring assembly 125A the second seal ring assembly 125B employ graphite molybdenum lubricants and dry powder lubricants.

The biasing rings 125Q1, 125Q2 and 125Q3 are made from nickel based alloys such as 700 series.

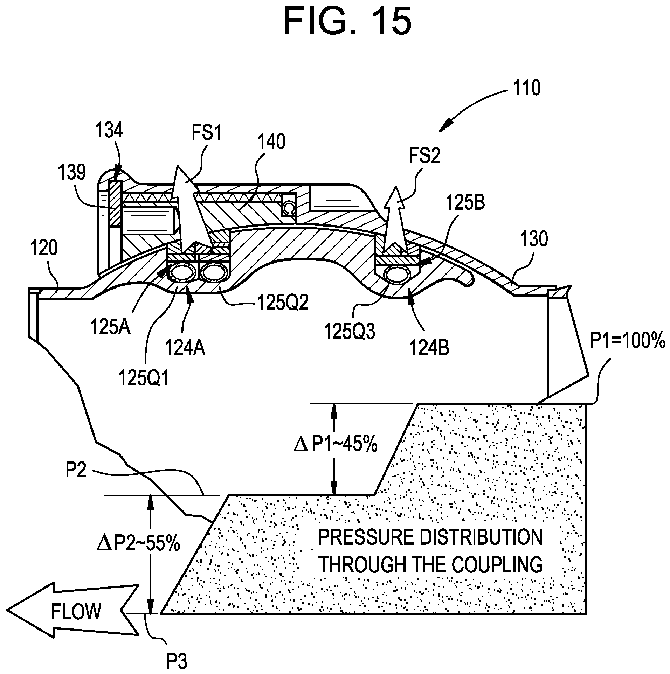

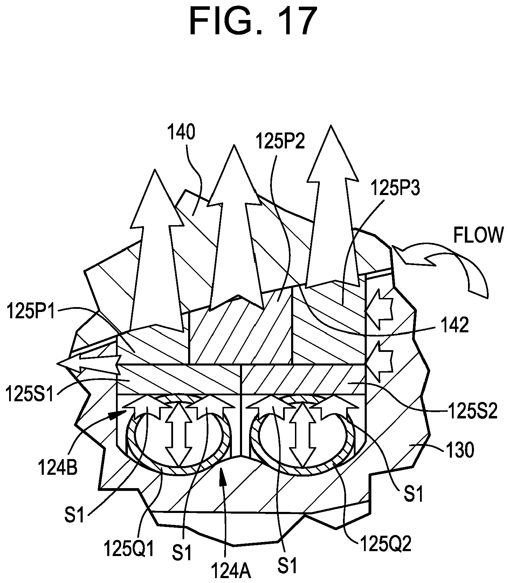

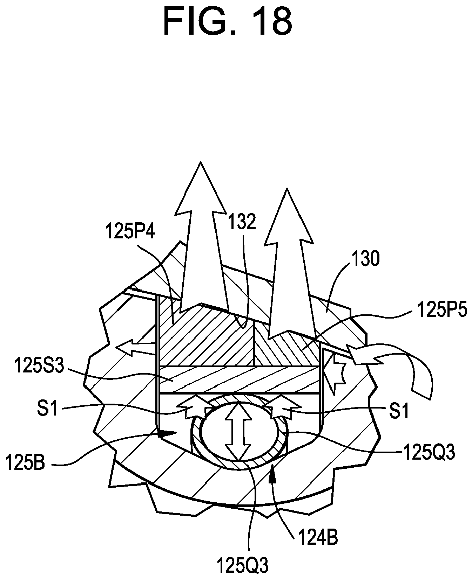

Referring to FIG. 15, during system operation with the flexible coupling 110, when first seal ring assembly 125A and the second seal ring assembly 125B are exposed to system pressure, the second seal ring assembly 125B is pressure balanced and provides approximately 45% expanding sealing force FS2 (i.e., radially outward direction) and the first seal ring assembly 125A is pressure balanced and provides a sealing force of 55% that is represented as a force vector FS1 having a 45% expanding force component (i.e., radially outward direction) and a 10% axial force component. The expanding sealing force FS2 has negligible axial component as the second seal assembly 125B seals against minimal axial pressure resistance, as shown in FIG. 18. As shown in FIG. 17, the first seal ring assembly 125A seals against an axial pressure resistance. This equalizes internal loads and minimizes internal stresses within flexible coupling 110.

Moreover, the first biasing ring 125Q1 and the second biasing ring 125Q2 provide static loads which assist the flexible coupling 110 to resists the system vibrations and dynamic loads that carbon seals or bellows based prior art seal are not capable of or are significantly limited to in such an operational environment. For example, the flexible coupling 110 resists vibrations including system accelerations under dynamic loads 40g and system vibrations: frequencies of 5 - 2000 Hz and peak-to-peak amplitude 0.5"- 0.0001".

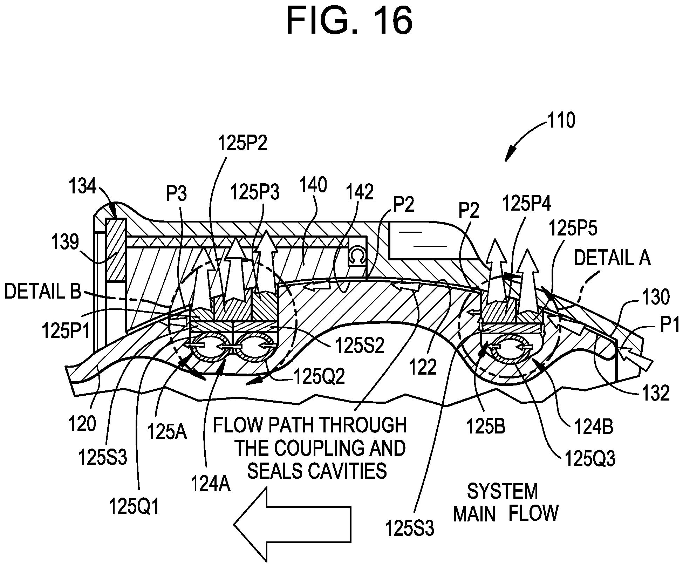

As shown in FIG. 16, the pressure distribution of fluid that leaks between the inner member 120 and the outer member 130 decreases in the direction of flow. Therefore, to maintain the pressure-forces balanced within the flexible coupling 110 the seal inner operational surfaces (surfaces exposed to system pressure) are increased as pressure through the coupling decreases. The second seal ring assembly 125B is exposed to the highest leakage pressure because it is first in the fluid flow path. The first seal ring assembly 125A is last in the flow path and is exposed to the lowest pressure.

As shown in FIG. 17, the pressure loads and seal energizing forces within the first seal ring assembly 125A illustrates that the first biasing ring 125Q1 exert forces S1 on the first secondary seal segment 125S1 and the second biasing member 125Q2 exert forces S1 on the second secondary seal segment 125S2. This results in radial forces being applied to the first primary seal segment 125P1, the second primary seal segment 125P2 and the third primary seal segment 125P3 which transmit the forces to the spherically shaped second concave seal receiving surface 142 of the locking member 140.

As shown in FIG. 18, the pressure loads and seal energizing forces within the second seal ring assembly 125B illustrates that the third biasing member 125Q3 exert forces S1 on the third secondary seal segment 125S3. This results in radial forces being applied to the fourth primary seal segment 125P4 and the fifth primary seal segment 125P5 which transmit the forces to the spherically shaped first concave seal receiving surface 132 of the outer member 130.

As shown in FIGS. 15 and 16, a portion of the fluid flowing through the conduits and the flexible coupling 110 leaks between the inner member 120 and the outer member 130. This fluid moves along the dashed arrows in FIG. 16, entering the leakage path at an entry pressure of PI as it enters the second seal ring assembly 125B and flows into the second radially inward extending seal ring assembly groove 124B along an axial side of the fifth primary seal segment 125P5 and an axial side of the third secondary seal segment 125S3, around the biasing member 125Q3, along an opposite axial side of the third secondary seal segment 125S3 and along an axial side of the fourth primary seal segment 125P4, thereby reducing the pressure by about 45% of PI to a second pressure P2.

The leakage flows between the spherically shaped convex seal receiving surface 122 of the inner member 120 and the spherically shaped first concave seal receiving surface 132 of the outer member 130 and then between the spherically shaped convex seal receiving surface 122 of the inner member 120 and the spherically shaped second concave seal receiving surface 142 of the locking member 140 at about the second pressure P2.

The leakage further flows along an axial side of the third primary seal segment 125P3, along an axial side of the second secondary seal segment 125S2, through the second biasing member 125Q2, through the first biasing member 125Q1, along an axial side of the first secondary seal segment 125S1 and along an axial side of the first primary seal segment 125P1, thereby reducing pressure by 55% of PI to a third pressure P3. In one embodiment, the third pressure is ambient pressure. Thus, a differential pressure ΔP2 = 0.45 · P1 occurs across the second seal ring assembly 125B; and a differential pressure AP1 = 0.55 · P1 occurs across the first seal ring assembly 125A.

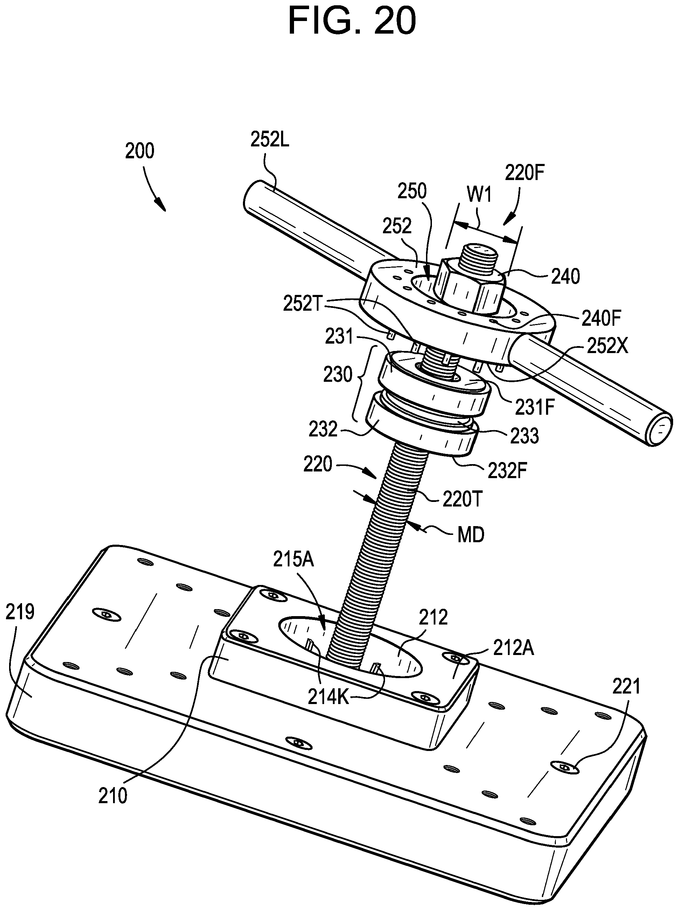

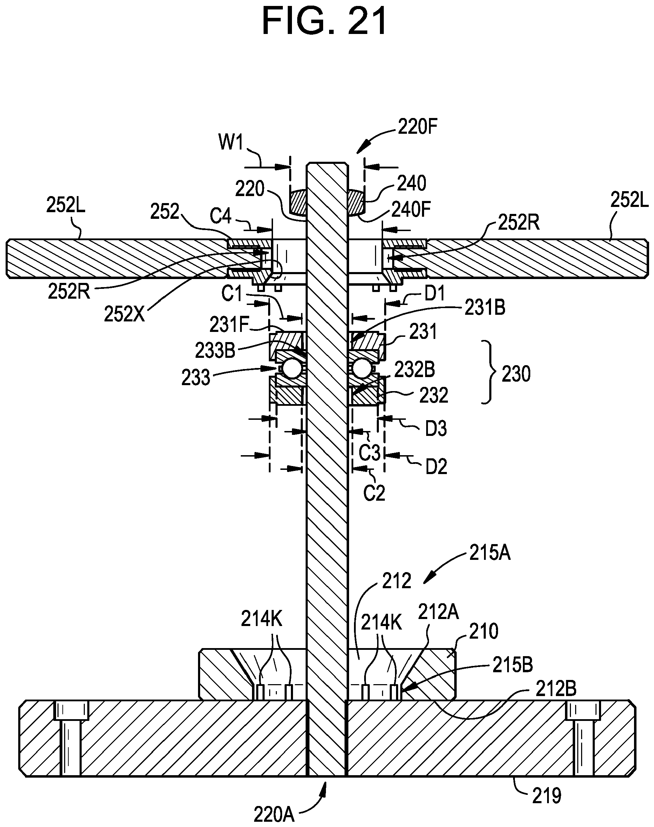

As shown in FIGS. 20-23, a tool 200 for assembling the flexible coupling 10, 110 is also disclosed herein. The tool 200 has a housing 210, a threaded rod 220, a thrust transfer assembly 230, a nut 240 and a torque application assembly 250. In the embodiment depicted in FIGS. 20-23, the housing 210 is secured to a base plate 219. The housing 210 defines a first interior surface 212 and at least one first anti-rotation feature 214K is in communication with the first interior surface 212. The first interior surface 212 extends axially from a first end 212A to a second end 212B. The first interior surface 212 is defined by a first opening 215A at the first end 212A. The first interior surface 212 is arcuate shaped (i.e., the first interior surface 212 has a cross section defined by an arc). In one embodiment, the anti-rotation features 214K extend from the first interior surface 215A. The anti-rotation features 214K extending from the first interior surface 215A are keys that engage complementary structures on the inner member 130, as discussed in detail below. The threaded rod 220 has threads 220T that extend continuously from an anchor end 220A to a free end 220F. The anchor end 220A of the threaded rod 220 is secured relative to the housing 210. For example, the rod 220 is shown as threaded into the housing 210 and the base plate 219. The rod 220 may be secured to the housing 210 and/or the base plate 219 by other engagement means or the rod 220 may be integral with the housing 210 and/or the base plate 219. The threaded rod 220 extends out of and away from the housing 210 through the first opening 215A. As shown in FIG. 20, the threads 220T having a major diameter MD. As shown in FIG. 21, the second end 212B of the housing 210 defines a second opening 215B. As a result, the base plate 219 is accessible through the second opening 215B and the threaded rod 220 is secured to the base plate 219. The tool 200 is also compatible with the low profile flexible coupling 10 in low temperature / low pressure pneumatic systems as discussed above with respect to FIGS. 1-7.

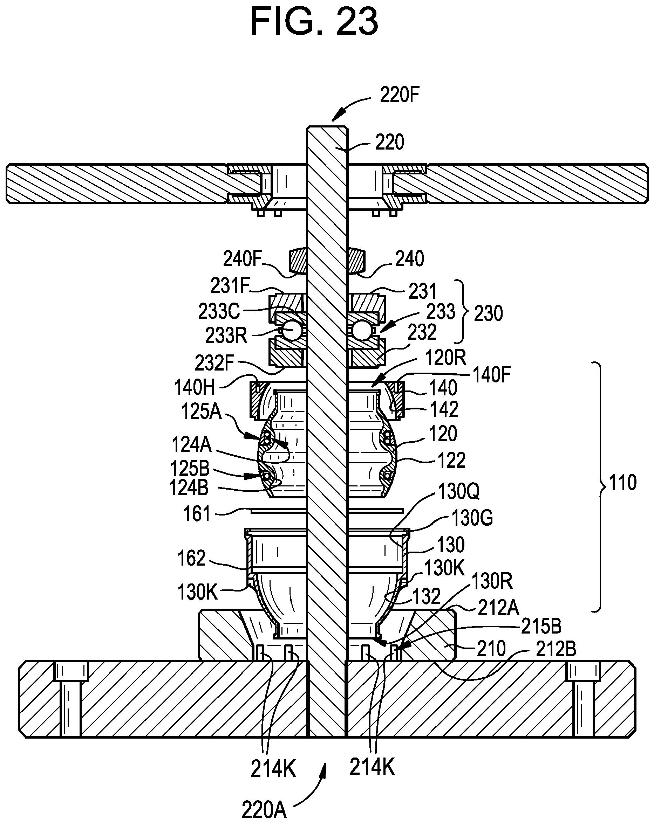

As shown in FIGS. 20-23, the thrust transfer assembly 230 has a first bearing plate 231, a second bearing plate 232 and a thrust bearing 233 positioned between and in rolling engagement with the first bearing plate 231 and the second bearing plate 232. As shown in FIG. 21, the first bearing plate 231 is defined by a first outside diameter D1. A first bore 231B of the first bearing plate 231, defined by a first inside diameter C1, extends through the first bearing plate 231. The second bearing plate 232 is defined by a second outside diameter D2. A second bore 232B of the second bearing plate 232, defined by a second inside diameter C2, extends through the second bearing plate 232. The thrust bearing 233 is defined by a third outside diameter D3. A third bore 233B of the thrust bearing 233, defined by a third inside diameter C3, extends through the thrust bearing 233. The first inside diameter C1, the second inside diameter C2 and the third inside diameter C3 are larger than the major diameter MD of the threads 220T. The threaded rod 220 extends through the first bore 231B, the second bore 232B and the third bore 233B and the thrust transfer assembly 230 is axially movable relative to the threaded rod 220. Referring to FIG. 23, the thrust bearing 233 has a plurality of rolling elements 233R retained within a cage 233C that is disposed between a first annular ring 233A and a second annular ring 233B. In the embodiment depicted in FIGS. 20-23, the first annular ring 233A is press fit into the first bearing plate 231 and the second annular ring 233B is press fit into the second bearing plate 232, such that the first annular ring 233A rotates about the threaded rod 220 with the first bearing plate 231 and the second annular ring 233B rotates about the threaded rod 220 with the second bearing plate 232. Incorporating other retention means between the first annular ring 233A and the first bearing plate 231 and between the second annular ring 233B and the second bearing plate 232 do not depart from the scope of the present disclosure. The cage 233C axially retains the first annular ring 233A relative to the second annular ring 233B while allowing the first annular ring 233A to rotate relative to the second annular ring 233B about the threaded rod 220. In one embodiment, there is an radial clearance of at least 0.1 inches between the third inside diameter C3 defined by the first annular ring 233A, the second annular ring 233B and/or the cage 233C and the major diameter MD of the threaded rod 220.

As shown in FIG. 21, a nut 240 is threaded onto the threaded rod 220 from the free end 220F of the threaded rod 220. The nut 240 is defined by an exterior width W1 that is greater than the first inside diameter C1 of the first bore 231B of the first bearing plate 231. In the embodiment depicted in FIG. 20, the exterior width W1 measures the width of a head of the nut 240 from corner to corner or the hex across corners dimension. An axial face 240F of the nut 240 faces and engages a mating axial face 231F of the first bearing plate 231.

As shown in FIGS. 20 and 21, a torque application assembly 250 has an annular ring 252 and a leverage multiplying feature 252L. A second interior surface 252X extends through the annular ring 252 and faces the first interior surface 212 of the housing 210. The second interior surface 252X is defined by a minimum inside diameter C4. In the embodiment depicted in FIGS. 20-23, the minimum inside diameter C4 that is greater than each of the first outside diameter D1, the second outside diameter D2 and the third outside diameter D3. As a result, the annular ring 252 fits axially over the thrust transfer assembly 230. In the embodiment depicted in FIGS. 20 and 21, there is a radial clearance of approximately 0.022 inches between the exterior width W1 of the nut 240 and the minimum inside diameter C4 of the annular ring 252. In one embodiment, the second interior surface 252X is arcuate shaped. In other words, the cross-section of the section interior surface 252X is defined by an arc. A plurality of torque transfer features 252T are in communication with the second interior surface 252X. In the embodiment depicted in FIG. 21, each torque transfer feature 252T extends from an axial end 252B of the of the annular ring 252, generally parallel to the threaded rod 220. The torque transfer features 252T are pins that extend from the annular ring 252. A leverage multiplying feature 252L in the form of radially extending rods, extend from and engage leverage bores 252R extending radially through the annular ring 252.

As shown in FIGS. 20-23, four fasteners 221 extend from the base plate 219 and secure the base plate 219 to a tool cart (not depicted).

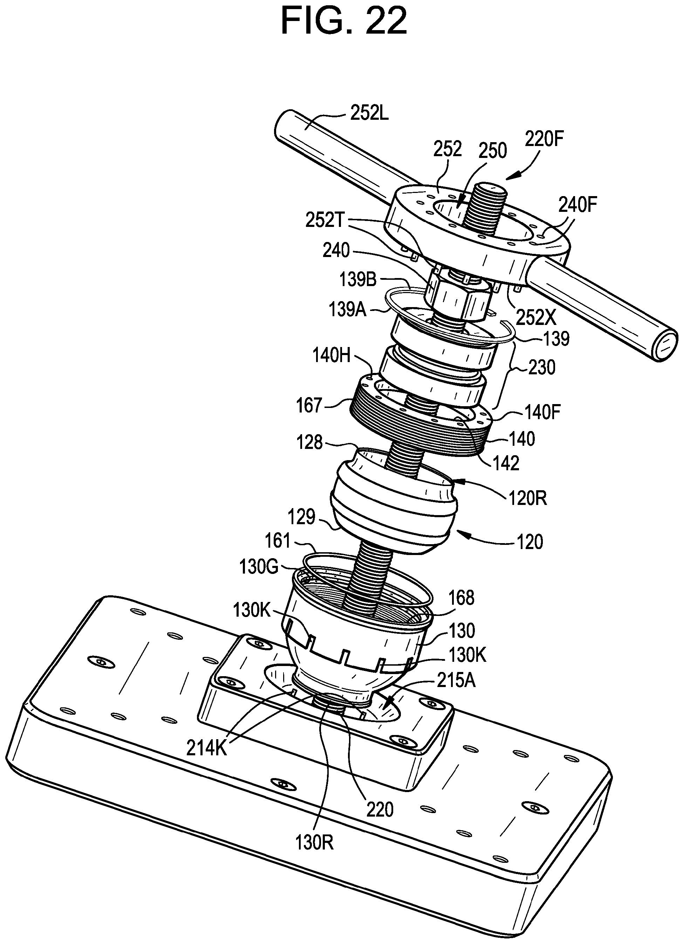

Referring to FIG. 23, a method of assembling a flexible coupling 110, as discussed above, with the tool 200 is also disclosed herein. Generally, the steps of the method of assembling as disclosed herein, and specifically the steps of providing and securing are presented in the order in which they occur. The method begins by providing the aforementioned tool 200 and an unassembled a flexible coupling 110 (depicted in detail in FIGS. 22 and 23) having an annular inner member 120, an annular outer member 130, a locking member 140 and an annular leakage seal 161 (a retaining ring 139 is also provided in at least one embodiment, as set forth below). The annular inner member 120 defines a convex seal receiving surface 122 and has a first axial facing receiving area 120R. The outer member 130 defines a first concave seal receiving surface 132 that conforms to the convex seal receiving surface 122. The outer member 130 has second anti-rotation features 130K (depicted in FIG. 22), a second axial facing receiving area 130R, an inwardly facing axial shoulder 162 and female threads 168 (depicted in FIG. 22). The locking member 140 defines a second concave seal receiving surface 142 that conforms to the convex seal receiving surface 122 of the annular inner member 120. An axially outward facing end 140F of the locking member 140 having a plurality of second torque transfer features 140H (depicted in FIG. 22). The locking member 140 has male threads 167 (depicted in FIG. 22) on a radially exterior surface of the locking member 140.

The method includes securing the threaded rod 220 relative to the housing 210. The method then includes positioning the outer member 130 over the threaded rod 220 and in the housing 210 with the second axial facing receiving area 130R of the outer member 130 being flush with the second end 212B of the housing 210. The threaded rod 220 extends through the outer member 130 and the first anti-rotation features 214K of the outer member 130 engage corresponding second anti-rotation features 130K extending from the housing 210. The method also includes positioning the annular leakage seal 161 on the shoulder 162 of the outer member 130 with the threaded rod 220 also extending through the annular leakage seal 161. The method includes positioning a portion of the inner member 120 in the outer member 130 with the first axial facing receiving area 120R of the inner member 120 extending out of the outer member 130 and the threaded rod 220 extending through the inner member 120. The method then includes positioning the locking member 140 in the outer member 130 with the male threads 167 set axially apart from the female threads 168 and the threaded rod 220 extending through the locking member 140. After aligning the outer member 130, the annular leakage seal 161, the inner member 120 and the locking member 140 on the threaded rod 220, the method then includes sliding the thrust transfer assembly 230 over the threaded rod 220 until an axial face 232F of the second bearing plate 232 engages the first axial facing receiving area 120R of the inner member 120. The method then includes threading the nut 240 onto the threaded rod 240 from the free end 220F, until the axial face 240F of the nut engages the mating axial face 231F of the first thrust plate 230. The method then includes torquing the nut 240 until the inner member 120 is seated in the outer member 130 (i.e., until the convex seal receiving surface 122 of the inner member 120 engages the complementary shaped first concave seal receiving surface 32 of the outer member 130). The method then includes sliding the torque application assembly 250 over the threaded rod 220 and rotating the torque application assembly 250 until the first torque transfer features 252T of the torque application assembly 250 engage the second torque transfer features 140H of the locking member 140, at which point axial translation of the torque application assembly 250 (movement along the threaded rod 220) fully engages the first torque transfer features 252T with the second torque transfer features 140H. At this point, torquing the torque application assembly 250 threadingly engages the male threads 167 of the locking member 140 with the female threads 168 until the annular leakage seal 161 is compressed to a predetermined magnitude. In the embodiment depicted in FIG. 22, the annular leakage seal 161 is in the form of a C-shaped crush seal, that compresses a predetermined magnitude of between 0.010 and 0.012 inches when the locking member 140 is fully engaged. As a result, the locking ring 140 is recessed into the outer member 130.

In the embodiment depicted in FIG. 22, the method also includes providing a retaining ring 139 with an inboard axial face 139A and an opposing outboard axial face 139B. The inner surface 130Q of the outer member 130 has a radially inward opening retaining ring groove 130G. The method includes installing the retaining ring 139 in the retaining groove 130G such that the inboard axial face 139A of the retaining ring 139 is flush with the axial retaining surface 140F of the locking ring 140.

The inner member 120 in the embodiment depicted in FIGS. 20-23, defines a spherically shaped convex seal receiving surface 122 extending from a first end 128 to a second end 129. As shown in FIG. 23, a radially inward extending seal ring assembly groove 124A and a second radially inward extending seal ring assembly groove 124B interrupt the convex seal receiving surface 122. The first radially inward extending seal ring assembly groove 124A extends circumferentially around the inner member 120 and extends radially inward from the convex seal receiving surface 122 and the second radially inward extending seal ring assembly groove 124B extends circumferentially around the inner member 120 and extends radially inward from the convex seal receiving surface 122. A first seal ring assembly 125A is disposed in the first radially inward extending seal ring assembly groove 124A and a second seal ring assembly 125B is disposed in the second radially inward extending seal ring assembly groove 124B.

The following numbered clauses include embodiments that are contemplated and nonlimiting:
Clause 1 A low profile flexible coupling installed in pneumatic systems to provide transfer of a gas between first and second conduits, the flexible coupling comprising: a hollow annular inner member centered on an inner centerline and defining a convex seal receiving surface extending from a first end to a second end and interrupted by a radially inward extending seal ring assembly groove; a structural coupling member assembled over the inner member, the structural coupling member defining a spherically shaped second concave seal receiving surface and an inwardly extending ring stop, the concave seal receiving surface conforming to and engaging the convex seal receiving surface and interrupted by a first radially outward extending seal groove; and a hollow annular outer member centered on an outer centerline and assembled over the inner member and over the structure coupling member, the outer member defining a spherically shaped first concave seal receiving surface conforming to the convex seal receiving surface and interrupted by a second radially outward extending seal ring assembly groove.
Clause 2 The flexible coupling of clause 1, further comprising a retainer ring installed into an inwardly extending retainer groove within the hollow annular outer member.
Clause 3 The flexible coupling of clause 1, wherein the ring stop binds against the first end of the convex seal receiving surface at a maximum angulation angle; and the first concave seal receiving surface, the second concave seal receiving surface, and the convex seal receiving surface each surround a centerline and the convex seal receiving surface is movable relative to the first concave seal receiving surface and the second concave seal receiving surface about a common center point C.
Clause 4 The flexible coupling of clause 1, further comprising a series of seal ring assemblies disposed in each of the radially inward extending seal ring assembly groove, the first radially outward extending seal ring assembly groove, and the second radially outward extending seal groove.
Clause 5 The flexible coupling of clause 4, wherein at least one of the series of seal assemblies contains at least one seal member and at least one seal energizer.
Clause 6 The flexible coupling of clause 4, wherein the seal energizer is a canted biasing member.
Clause 7 The flexible coupling of clause 4, wherein the at least one seal member is a C-shaped seal ring, the C-shaped seal ring being disposed in the second radially outward extending seal groove and the seal energizer installs into a seal cavity within the C-shaped seal ring.
Clause 8 The flexible coupling of clause 1, wherein a center seal assembly is installed into the radially inward extending seal ring assembly groove, the center seal assembly includes a convex spherical crown equipped with at least two seal energizers, the convex spherical crown conforming to the first concave seal receiving surface and the second concave seal receiving surface, the seal energizers generating a biasing force acting outwards away from the radially inward extending seal ring assembly groove.
Clause 9 The flexible coupling of clause 4, wherein the at least one seal member is a generally L-shaped seal ring, and the at least one seal energizer generates a biasing force acting simultaneously inwardly toward the inner member and axially against an outer shoulder of the outer member.
Clause 10 The flexible coupling of clause 1, wherein the structural coupling member 40 is a hollow annular locking nut.
Clause 11 The flexible coupling of clause 1, wherein a first threading on the outer member engages a complementary second threading on the structural member to secure the coupling member to the outer member.
Clause 12 The flexible coupling of clause 1, further comprising a leakage seal mounted axially between the structural member and the outer member.
Clause 13 The flexible coupling of clause 1, further comprising a profile ratio of a coupling radial thickness R1 to a conduit diameter D_{C} configured to accommodate installation of the flexible coupling within a tight installation window, wherein the coupling radial thickness R1 is defined as the radial thickness of the outer member and the conduit diameter D_{C} is defined as the diameter of the first and/or second conduits.
Clause 14 The flexible coupling of clause 13, wherein the profile ratio is less than approximately 0.17.
Clause 15 The flexible coupling of clause 13, wherein the profile ratio is between approximately 0.13 and 0.14.
Clause 16 A low profile flexible coupling for pneumatic systems to provide transfer of a gas between first and second conduits, the flexible coupling comprising: an annular inner member defining a spherically shaped convex seal receiving surface extending from a first end to a second end and interrupted by a first radially inward extending seal ring assembly groove that extends circumferentially around the inner member; an annular outer member assembled over the inner member, the outer member defining a spherically shaped first concave seal receiving surface conforming to the convex seal receiving surface; and a locking member assembled over the inner member, the locking member defining a spherically shaped second concave seal receiving surface, the second concave seal receiving surface conforming to the convex seal receiving surface and the outer member being positioned over the locking member.
Clause 17 The flexible coupling of clause 16, wherein the flexible coupling is configured for low temperature and low pressure operation and wherein the first concave seal receiving surface of the outer member is interrupted by a first radially outward extending seal assembly groove that extends circumferentially around the outer member.
Clause 18 The flexible coupling of clause 16, wherein the flexible coupling is configured for low temperature and low pressure operation and the second concave seal receiving surface of the locking ring being interrupted by a second radially outward extending seal assembly groove that extends circumferentially around the locking member.
Clause 19 The flexible coupling of clause 16, wherein the flexible coupling is configured for high temperature and high pressure operation and the convex seal receiving surface of the annular inner member being interrupted by a second radially outward extending seal ring assembly groove that extends circumferentially around the inner member.
Clause 20 The flexible coupling of clause 16, further comprising a profile ratio of a coupling radial thickness to a conduit diameter, the profile ratio being of a magnitude sufficient to accommodate installation of the flexible coupling within a tight installation window, wherein the coupling radial thickness is defined as the radial thickness of the outer member and the conduit diameter is defined as the diameter of the first and/or second conduits.
Clause 21 The flexible coupling of clause 20, wherein the profile ratio is less than approximately 0.17.
Clause 22 The flexible coupling of clause 20, wherein the profile ratio is between approximately 0.13 and 0.14.
Clause 23 A low profile flexible coupling for low temperature and low pressure pneumatic systems to provide transfer of a gas between first and second conduits, the flexible coupling comprising: an annular inner member defining a spherically shaped convex seal receiving surface extending from a first end to a second end and interrupted by a radially inward extending seal ring assembly groove that extends circumferentially around the inner member and extends radially inward from the convex seal receiving surface; an annular outer member assembled over the inner member, the outer member defining a spherically shaped first concave seal receiving surface conforming to the convex seal receiving surface and interrupted by a first radially outward extending seal groove that extends circumferentially around the outer member and extends radially outward from the first concave seal receiving surface; and a locking member assembled over the inner member, the locking member defining a spherically shaped second concave seal receiving surface, the second concave seal receiving surface conforming to the convex seal receiving surface and the second concave seal receiving surface being interrupted by a second radially outward extending seal groove that extends circumferentially around the locking member and extends radially outward from the second concave seal receiving surface, the outer member being positioned over the locking member.
Clause 24 The low profile flexible coupling of clause 23, further comprising a retainer ring installed into a radially outward extending retainer ring groove formed in the outer member.
Clause 25 The low profile flexible coupling of clause 23, wherein the locking member comprises an abutment surface formed on an edge of the locking member, the abutment surface abuts against the first end of the convex seal receiving surface at a maximum angulation angle; and the first concave seal receiving surface seal receiving surface, the second concave seal receiving surface seal receiving surface, and the convex seal receiving surface seal receiving surface each surround a centerline and the convex seal receiving surface is movable relative to the first concave seal receiving surface and the second concave seal receiving surface about a common center point.
Clause 26 The flexible coupling of clause 23, further comprising at least one of: (a) a first seal ring assembly disposed in the radially inward extending seal ring assembly groove, (b) a second seal ring assembly disposed in the first radially outward extending seal ring assembly groove, and (c) a third seal ring assembly disposed in the second radially outward extending seal ring assembly groove.
Clause 27 The flexible coupling of clause 26, wherein at least one of the first seal ring assembly, the second seal ring assembly and the third seal ring assembly comprises at least one seal member and at least one seal energizer.
Clause 28 The flexible coupling of clause 27, wherein the seal energizer comprises a canted biasing member.
Clause 29 The flexible coupling of clause 26, wherein the third seal ring assembly comprises a C-shaped seal ring, the C-shaped seal ring being disposed in the third seal ring assembly groove and the seal energizer is disposed in a seal cavity formed in the C-shaped seal ring.
Clause 30 The flexible coupling of clause 23, wherein a first seal ring assembly is disposed in the radially inward extending seal ring assembly groove, the first seal ring assembly comprises a convex spherical crown having at least two seal energizers, the convex spherical crown conforming to the first spherically shaped concave seal receiving surface and the spherically shaped second concave seal receiving surface, the seal energizers generating a biasing force acting outwards away from the radially inward extending seal ring assembly groove.
Clause 31 The flexible coupling of clause 26, wherein the second seal ring assembly is a generally L-shaped seal ring and comprises at least one seal energizer that generates a biasing force acting simultaneously inwardly toward the inner member and axially against an outer shoulder of the outer member.
Clause 32 The flexible coupling of clause 23, wherein the locking member is an annular locking nut.
Clause 33 The flexible coupling of clause 23, wherein a first thread on the outer member engages a complementary second thread on the locking member to secure the locking member to the outer member.
Clause 34 The flexible coupling of clause 23, further comprising an annular leakage seal mounted axially between the locking member and the outer member.
Clause 35 The flexible coupling of clause 23, further comprising a profile ratio of a coupling radial thickness to a conduit diameter the profile ratio being of a magnitude sufficient to accommodate installation of the flexible coupling within a tight installation window, wherein the coupling radial thickness is defined as the radial thickness of the outer member and the conduit diameter is defined as the diameter of the first and/or second conduits.
Clause 36 The flexible coupling of clause 35, wherein the profile ratio is less than approximately 0.17.
Clause 37 The flexible coupling of clause 35, wherein the profile ratio is between approximately 0.13 and 0.14.
Clause 38 A low profile flexible coupling for high temperature and high pressure pneumatic systems to provide transfer of a gas between first and second conduits, the flexible coupling comprising: an annular inner member defining a spherically shaped convex seal receiving surface extending from a first end to a second end, the inner member being interrupted by a first radially inward extending seal ring assembly groove that extends circumferentially around the inner member and extends radially inward from the convex seal receiving surface and a second radially inward extending seal ring assembly groove that extends circumferentially around the inner member and extends radially inward from the convex seal receiving surface;
   an annular outer member assembled over the inner member, the outer member defining a spherically shaped first concave sealing surface conforming to the convex seal receiving surface; and a locking member assembled over the inner member, the locking member defining a spherically shaped second concave sealing surface, the second concave sealing surface conforming to the convex seal receiving surface and the outer member being positioned over the locking member.
Clause 39 The low profile flexible coupling of clause 38, further comprising a retainer ring installed into a radially inward opening retainer ring groove formed in the outer member.
Clause 40 The low profile flexible coupling of clause 38, wherein the locking member comprises an abutment surface formed on an edge of the locking member, the abutment surface abuts against the first end of the convex seal receiving surface at a maximum angulation angle; and the first concave sealing surface, the second concave sealing surface, and the convex seal receiving surface each surround a centerline and the convex seal receiving surface is movable relative to the first concave sealing surface and the second concave sealing surface about a common center point.
Clause 41 The flexible coupling of clause 38, further comprising at least one of: (a) a first seal ring assembly disposed in the first radially inward extending seal ring assembly groove and (b) a second seal ring assembly disposed in the second radially inward extending seal ring assembly groove.
Clause 42 The flexible coupling of clause 41, wherein the first seal ring assembly comprises: a first primary annular seal segment, a second primary annular seal segment and a third primary annular seal segment, the second primary seal segment being positioned between and axially abutting the first primary seal segment and the third primary seal segment; a first secondary annular seal segment and a second secondary annular seal segment axially abutting the first secondary annular seal segment at a first abutment interface, the first secondary annular seal segment and the second annular seal segment being disposed radially inward of the first primary annular seal segment, the second primary annular seal segment and the third primary annular seal segment, the first abutment interface being positioned along an inside surface of the second primary seal segment; and a first biasing ring and a second biasing ring located axially adjacent to one another; the first biasing ring being positioned radially inward of the first secondary annular seal segment; the first biasing ring being configured to urge the first secondary seal segment, the first primary annular seal segment and the second primary annular seal segment radially outward against and in sealing engagement with the spherically shaped second concave sealing surface of the locking member; and the second biasing ring being configured to urge the second secondary seal segment, the second primary annular seal segment and the third primary annular seal segment radially outward against and in sealing engagement with the spherically shaped second concave sealing surface of the locking member.
Clause 43 The flexible coupling of clause 41, wherein the first primary annular seal segment, the second primary annular seal segment and the third primary annular seal segment cooperate with one another to form a first convex spherical crown conforming in shape to the spherically shaped second concave sealing surface of the locking member.
Clause 44 The flexible coupling of clause 41, wherein the first secondary annular seal segment extends axially across the first primary annular seal segment and a portion of the second primary annular seal segment.
Clause 45 The flexible coupling of clause 41, wherein the second secondary annular seal segment extends axially across the third primary annular seal segment and a portion of the second primary annular seal segment.
Clause 46 The flexible coupling of clause 41, wherein the second seal ring assembly comprises: a fourth primary annular seal segment and a fifth primary annular seal segment axially abutting each other; a third secondary annular seal segment disposed radially inward of the fourth primary annular seal segment and the fifth primary annular seal segment; and a third biasing ring positioned radially inward of the third secondary annular seal segment; the third biasing ring being configured to urge the third secondary seal segment, the fourth primary annular seal segment and the fifth primary annular seal segment radially outward against and in sealing engagement with the spherically shaped first concave sealing surface of the outer member.
Clause 47 The flexible coupling of clause 46, wherein the third secondary seal segment extends axially across the fourth primary annular seal segment and the fifth primary annular seal segment.
Clause 48 The flexible coupling of clause 38, wherein the locking member is an annular locking nut.
Clause 49 The flexible coupling of clause 38, wherein a first thread on the outer member engages a complementary second thread on the locking member to secure the locking member to the outer member.
Clause 50 The flexible coupling of clause 38, further comprising an annular leakage seal 61 mounted axially between the locking member and the outer member.
Clause 51 The flexible coupling of clause 38, further comprising a profile ratio of a coupling radial thickness to a conduit diameter, the profile ratio being of a magnitude sufficient to accommodate installation of the flexible coupling within a tight installation window, wherein the coupling radial thickness is defined as the radial thickness of the outer member and the conduit diameter is defined as the diameter of the first and/or second conduits.
Clause 52 The flexible coupling of clause 51, wherein the profile ratio is less than approximately 0.17.
Clause 53 The flexible coupling of clause 51, wherein the profile ratio is between approximately 0.13 and 0.14.
Clause 54 A tool for assembling a flexible coupling, the tool comprising: a housing comprising a first interior surface and at least one first anti-rotation feature in communication with the first interior surface, the first interior surface extending axially from a first end to a second end, a first opening being located at the first end; a threaded rod having threads extending continuously from an anchor end to a free end of the threaded rod, the anchor end of the threaded rod being secured relative to the housing, the threaded rod extending out of the housing through the first opening, the threads having a major diameter; a thrust transfer assembly having a first bearing plate and a second bearing plate, a thrust bearing positioned between and in rolling engagement with the first bearing plate and the second bearing plate, the first bearing plate having a first outside diameter and a first bore extending therethrough, the first bore having a first inside diameter, the second bearing plate having a second outside diameter and a second bore extending therethrough, the second bore having a second inside diameter, the thrust bearing having a third outside diameter and a third bore extending therethrough, the third bore having a third inside diameter, the first inside diameter, the second inside diameter and the third inside diameter being greater than the major diameter of the threads, the threaded rod extending through the first bore, the second bore and the third bore such that the thrust transfer assembly is axially movable relative to the threaded rod; a nut threaded onto the threaded rod from the free end of the threaded rod, the nut having an exterior width that is greater than the first inside diameter, an axial face of the nut being configured to engage a mating axial face of the first bearing plate; and a torque application assembly comprising an annular ring having a second interior surface extending axially therethrough and facing the first interior surface of the housing, the second interior surface having a minimum inside diameter that is greater than the first outside diameter, the second outside diameter and the third outside diameter, such that the annular ring fits axially over the thrust transfer assembly, at least one first torque transfer feature in communication with the second interior surface.
Clause 55 The tool of clause 54, wherein the housing is secured to a base plate.
Clause 56 The tool of clause 55, further comprising at least one fastener extending from the base plate for securing the base plate to a tool cart.
Clause 57 The tool of clause 55, further comprising a second opening being located at the second end of the housing such that the base plate is accessible through the second opening and the threaded rod is secured to the base plate.
Clause 58 The tool of clause 54, wherein the first interior surface is arcuate shaped.
Clause 59 The tool of clause 54, wherein the at least one first anti-rotation feature comprise a key.
Clause 60 The tool of clause 54, wherein the second interior surface is arcuate shaped.
Clause 61 The tool of clause 54, wherein the at least one first torque transfer feature comprises a pin.
Clause 62 The tool of clause 54, wherein the annular ring of the torque application assembly comprises a leverage multiplying feature.
Clause 63 The tool of clause 54, wherein the thrust bearing comprises a plurality of rolling elements.
Clause 64 A method of assembling a flexible coupling, the method comprising: providing a tool according to clause 54; providing an unassembled a flexible coupling comprising: an annular inner member defining a spherically shaped convex seal receiving surface and the inner member having a first axial facing receiving area; an annular outer member, the outer member defining a spherically shaped first concave seal receiving surface conforming to the convex seal receiving surface, the outer member having at least one second anti-rotation feature thereon, the outer member having a second axial facing receiving area, an inwardly facing axial shoulder and female threads; a locking member, the locking member defining a spherically shaped second concave seal receiving surface, the second concave sealing surface conforming to convex seal receiving surface, an axially outward facing end of the locking member having at least one second torque transfer feature thereon and male threads thereon; and an annular leakage seal; securing the threaded rod relative to the housing; positioning the outer member in the housing with the second axial facing receiving area being flush with the second end of the housing, the threaded rod extending through the outer member and the at least one first anti-rotation feature engaging the at least one second anti-rotation feature thereon; positioning the annular leakage seal on the shoulder of the outer member with the threaded rod extending through the annular leakage seal; positioning a portion of the inner member in the outer member with the first axial facing receiving area of the inner member extending out of the outer member and the threaded rod extending through the inner member; positioning the locking member in the outer member with the male threads set axially apart from the female threads and the threaded rod extending therethrough; sliding the thrust transfer assembly over the threaded rod; seating an axial face of the second bearing plate in the first axial facing receiving area of the inner member; threading the nut onto the threaded rod such that the axial face of the nut engages the mating axial face of the first thrust plate; torquing the nut until the inner member is seated in the outer member; sliding the torque application assembly over the threaded rod; engaging the at least one first torque transfer feature of the torque application assembly with the at least one second torque transfer feature of the locking member; torquing the torque application assembly to threadingly engage male threads with female threads until the annular leakage seal is compressed to a predetermined magnitude and so that the locking ring is recessed into the outer member.
Clause 65 The method of clause 64, further comprising: providing a retaining ring having a inboard axial face and an outboard axial face; providing a radially inward opening retaining ring groove in the inner surface of the outer member; installing the retaining ring in the retaining groove such that the inboard axial face of the retaining ring is flush with the axial retaining surface of the locking ring.
Clause 66 The method of clause 64, wherein the inner member defines a spherically shaped convex seal receiving surface extending from a first end to a second end, the inner member being interrupted by a first radially inward extending seal ring assembly groove that extends circumferentially around the inner member and extends radially inward from the first convex seal receiving surface and a second radially inward extending seal ring assembly groove that extends circumferentially around the inner member and extends radially inward from the second convex seal receiving surface; a first seal ring assembly disposed in the first radially inward extending seal ring assembly groove; and a second seal ring assembly disposed in the second radially inward extending seal ring assembly groove.
Clause 67 The method of clause 64, further comprising a first seal ring assembly, a second seal ring assembly and a third seal ring assembly, wherein the annular inner member defines a convex seal receiving surface extending from a first end to a second end, the inner member being interrupted by a radially inward extending seal ring assembly groove that extends circumferentially around the inner member and extends radially inward from the convex seal receiving surface and the first seal ring assembly disposed in the radially inward extending seal ring assembly groove, the first concave seal receiving surface being interrupted by a first radially outward extending seal ring assembly groove that extends circumferentially around the outer member and extends radially outward from the first concave seal receiving surface and the second seal ring assembly disposed in the first radially outward extending seal ring assembly groove, and the second concave seal receiving surface being interrupted by a second radially outward extending seal assembly groove that extends circumferentially around the locking member and extends radially outward from the second concave seal receiving surface and the third seal ring assembly disposed in the second radially outward extending seal ring assembly groove.

Although this invention has been shown and described with respect to the detailed embodiments thereof, it will be understood by those of skill in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

## Claims

1. A low profile flexible coupling (10, 110) for pneumatic systems to provide transfer of a gas between first and second conduits (111A, 111B), the flexible coupling (10, 110) comprising:
an annular inner member (20, 120) defining a spherically shaped convex seal receiving surface (22, 122) extending from a first end (28, 128) to a second end (29, 129) and interrupted by a first radially inward extending seal ring assembly groove (24, 124A) that extends circumferentially around the inner member (20, 120);
an annular outer member (30, 130) assembled over the inner member (20, 120), the outer member (30, 130) defining a spherically shaped first concave seal receiving surface (32, 132) conforming to the convex seal receiving surface (22, 122); and
a locking member (40, 140), preferably an annular locking nut, assembled over the inner member (20, 120), the locking member (40, 140) defining a spherically shaped second concave seal receiving surface (42, 142), the second concave seal receiving surface (42, 142) conforming to the convex seal receiving surface (22, 122) and the outer member (30, 130) being positioned over the locking member (40, 140).

2. The flexible coupling (10, 110) of claim 1, further comprising a profile ratio (PR) of a coupling radial thickness (R1) to a conduit diameter (DC), the profile ratio (PR) being of a magnitude sufficient to accommodate installation of the flexible coupling (10, 110) within a tight installation window, wherein the coupling radial thickness (R1) is defined as the radial thickness of the outer member (30, 130) and the conduit diameter (DC) is defined as the diameter of the first and/or second conduits (111A, 111B), wherein the profile ratio is preferably less than approximately 0.17 and more preferably between approximately 0.13 and 0.14.

3. The flexible coupling (10, 110) of any of the preceding claims, further comprising a retainer ring installed into a radially outward extending retainer ring groove formed in the outer member.

4. The flexible coupling (10, 110) of any of the preceding claims, wherein the locking member comprises an abutment surface formed on an edge of the locking member, the abutment surface abuts against the first end of the convex seal receiving surface at a maximum angulation angle; and the first concave seal receiving surface, the second concave seal receiving surface, and the convex seal receiving surface each surround a centerline and the convex seal receiving surface is movable relative to the first concave seal receiving surface and the second concave seal receiving surface about a common center point C.

5. The flexible coupling (10, 110) of any of the preceding claims, wherein a first thread on the outer member engages a complementary second thread on the locking member to secure the locking member to the outer member.

6. The flexible coupling (10, 110) of any of the preceding claims, further comprising an annular leakage seal mounted axially between the locking member and the outer member.

7. The flexible coupling (10) of any of the preceding claims, wherein the flexible coupling (10) is configured for low temperature and low pressure operation and wherein the first concave seal receiving surface (32) of the outer member (30) is interrupted by a first radially outward extending seal ring assembly groove (38) that extends circumferentially around the outer member (30), or
wherein the flexible coupling (10) is configured for low temperature and low pressure operation and the second concave seal receiving surface (42) of the locking ring (40) being interrupted by a second radially outward extending seal ring assembly groove (48) that extends circumferentially around the locking member (40).

8. The flexible coupling (10) of claim 7, further comprising at least one of: (a) a first seal ring assembly (25) disposed in the first radially inward extending seal ring assembly groove (24), (b) a second seal ring assembly (35) disposed in the first radially outward extending seal ring assembly groove (38), and (c) a third seal ring assembly (45) disposed in the second radially outward extending seal ring assembly groove (48), and, optionally,
wherein at least one of the first seal ring assembly (25), the second seal ring assembly (35) and the third seal ring assembly (45) comprises at least one seal member (21, 31, 41) and at least one seal energizer (23, 33, 43), preferably a canted biasing member, or
wherein the third seal ring assembly (45) comprises a C-shaped seal ring (41), the C-shaped seal ring (41) being disposed in the second radially outward extending seal ring assembly groove (48) and the seal energizer (43) is disposed in a seal cavity formed in the C-shaped seal ring (41), or
wherein the second seal ring assembly (35) is a generally L-shaped seal ring (31) and comprises at least one seal energizer (33) that generates a biasing force acting simultaneously inwardly toward the inner member and axially against an outer shoulder (37) of the outer member (30).

9. The flexible coupling (10) of claim 7, wherein a first seal ring assembly (25) is disposed in the first radially inward extending seal ring assembly groove (24), the first seal ring assembly (25) comprising a convex spherical crown (21) having at least two seal energizers (23), the convex spherical crown (21) conforming to the first concave seal receiving surface (32) and the second concave seal receiving surface (42), the seal energizers (23) generating a biasing force acting outwardly away from the first radially inward extending seal ring assembly groove (24).

10. The flexible coupling (110) of any of claims 1-6, wherein the flexible coupling (110) is configured for high temperature and high pressure operation and the convex seal receiving surface (122) of the annular inner member (120) being interrupted by a second radially outward extending seal ring assembly groove (124B) that extends circumferentially around the inner member (120), and preferably comprising at least one of: (a) a first seal ring assembly (125A) disposed in the first radially inward extending seal ring assembly groove (124A), (b) a second seal ring assembly (125B) disposed in the second radially inward extending seal ring assembly groove (124B).

11. The flexible coupling (110) of claim 10, wherein the first seal ring assembly (125A) comprises:
a first primary annular seal segment (125P1), a second primary annular seal segment (125P2) and a third primary annular seal segment (125P3), the second primary seal segment (125P2) being positioned between and axially abutting the first primary seal segment (125P1) and the third primary seal segment (125P3);
a first secondary annular seal segment (125S1) and a second secondary annular seal segment (125S2) axially abutting the first secondary annular seal segment (125S1) at a first abutment interface (125X), the first secondary annular seal segment (125S1) and the second secondary annular seal segment (124S2) being disposed radially inward from the first primary annular seal segment (125P1), the second primary annular seal segment (125P2) and the third primary annular seal segment (125P3);
the first abutment interface (125X) being positioned along a radially inward facing surface of the second primary seal segment (125P2); and
a first biasing ring (125Q1) and a second biasing ring (125Q2) located axially adjacent to one another; the first biasing ring (125Q1) being positioned radially inward from the first secondary annular seal segment (125S1), the first biasing ring (125Q1) being configured to urge the first secondary seal segment (125S1), the first primary annular seal segment (125P1) and the second primary annular seal segment (125P2) radially outward against and in sealing engagement with the second concave seal receiving surface (142) of the locking member (140); and the second biasing ring (125Q2) being configured to urge the second secondary seal segment (125S2), the second primary annular seal segment (125P2) and the third primary annular seal segment (125P3) radially outward against and in sealing engagement with the second concave seal receiving surface (142) of the locking member (140),
wherein, optionally, the first secondary annular seal segment (125S1) extends axially across the first primary annular seal segment (125P1) and a portion of the second primary annular seal segment (125P2), and
wherein, optionally, the second secondary annular seal segment (125S2) extends axially across the third primary annular seal segment (125P3) and a portion of the second primary annular seal segment (125P2).

12. The flexible coupling (110) of claim 10, wherein the second seal ring assembly (125B) comprises:
a fourth primary annular seal segment (125P4) and a fifth primary annular seal segment (125P5) axially abutting each other;
a third secondary annular seal segment (125S3) disposed radially inward from the fourth primary annular seal segment (125P4) and the fifth primary annular seal segment (125P5); and
a third biasing ring (125Q3) positioned radially inward from the third secondary annular seal segment (125S3), the third biasing ring (125Q) being configured to urge the third secondary seal segment (125S3), the fourth primary annular seal segment (125P4) and the fifth primary annular seal segment (125P5) radially outward against and in sealing engagement with the first concave seal receiving surface (132) of the outer member (130), and wherein, optionally, the third secondary seal segment (125S3) extends axially across the fourth primary annular seal segment (125P4) and the fifth primary annular seal segment (125P5).

13. The flexible coupling (110) of claim 11 or 12, wherein at least one of:
(a) the first primary annular seal segment (125P1), the second primary annular seal segment (125P2) and the third primary annular seal segment (125P3) cooperate with one another to form a first convex spherical crown (125KA) conforming in shape to the second concave seal receiving surface (142) of the locking member (140); and
(b) the fourth primary annular seal segment (125P4) and the fifth primary annular seal segment (125P5) cooperate with one another to form a second convex spherical crown (125KB) conforming in shape to the first concave seal receiving surface (132) of the outer member (130).

14. A tool (200) for assembling a flexible coupling (10,110) of any of the previous claims, the tool (200) comprising:
a housing (210) comprising a first interior surface (212) and at least one first anti-rotation feature (214K);
a thrust transfer assembly (230) spaced apart from the housing (210);
a connector (220) extending between the housing (210) and the thrust transfer assembly (230);
a thrust transfer assembly (240) in variable engagement with the connector (220) and the thrust transfer assembly (230), for compressing the inner member (30, 130) into the outer member (20, 120); and
a torque application assembly (250) having at least one first torque transfer feature (252T) for transmitting torque to the locking member (40, 140).

15. The tool (200) of claim 14, wherein:
the housing (210) comprises a first interior surface (212) and the least one first anti-rotation feature (214K) being in communication with the first interior surface (212), the first interior surface (212) extending axially from a first end (212A) to a second end (212B), a first opening (215A) being located at the first end (212A);
the connector (220) comprises a threaded rod (220) having threads (220T) extending continuously from an anchor end (220A) to a free end (220F) of the threaded rod (220), the anchor end (220A) of the threaded rod (220) being secured relative to the housing (210), the threaded rod (220) extending out of the housing (210) through the first opening (215A), the threads (220T) having a major diameter (MD);
the thrust transfer assembly (230) having a first bearing plate (231) and a second bearing plate (232), a thrust bearing (233) positioned between and in rolling engagement with the first bearing plate (231) and the second bearing plate (232), the first bearing plate (231) having a first outside diameter (D1) and a first bore (231B) extending therethrough, the first bore (231B) having a first inside diameter (C1), the second bearing plate (232) having a second outside diameter (D2) and a second bore (232B) extending therethrough, the second bore (232B) having a second inside diameter (C2), the thrust bearing (233) having a third outside diameter (D3) and a third bore (233B) extending therethrough, the third bore (233B) having a third inside diameter (C3), the first inside diameter (C1), the second inside diameter (C2) and the third inside diameter (C3) being greater than the major diameter (MD) of the threads (220T), the threaded rod (220) extending through the first bore (231B), the second bore (232B) and the third bore (233B) such that the thrust transfer assembly (230) is axially movable relative to the threaded rod (220);
a nut (240) threaded onto the threaded rod (220) from the free end (220F) of the threaded rod (220), the nut (240) having an exterior width (W1) that is greater than the first inside diameter (C1), an axial face (240F) of the nut (240) being configured to engage a mating axial face (231F) of the first bearing plate (231); and
the torque application assembly (250) comprising an annular ring (252) having a second interior surface (252X) extending axially therethrough and facing the first interior surface (212) of the housing (210), the second interior surface (252X) having a minimum inside diameter (C4) that is greater than the first outside diameter (D1), the second outside diameter (D2) and the third outside diameter (D3), such that the annular ring (252) fits axially over the thrust transfer assembly (230), the at least one first torque transfer feature (252T) being in communication with the second interior surface (252X).

16. A method of assembling a flexible (10, 110) coupling of any of claims 1-13, the method comprising:
providing the assembly tool (200) according to claim 14 or 15;
providing an unassembled a flexible coupling (10, 110) according to any of claims 1-13;
seating the annular outer member (30, 130) in the housing (210);
engaging the second bearing plate (232) with the annular inner member (20, 120);
compressing the annular inner member (20, 120) into the outer member (30, 130) by torquing the nut (240) on the threaded rod (220) with the nut (240) bearing on the first bearing plate (231);
engaging the torque application assembly (250) with locking member (40, 140); and
torquing the locking member (40, 140) into the outer member (30, 130).
